(19) Europäisches Patentamt
European Patent Office
Office européen des brevets

(11) **EP 3 391 605 B1**

(12) **FASCICULE DE BREVET EUROPEEN**

(45) Date de publication et mention de la délivrance du brevet:
**19.05.2021 Bulletin 2021/20**

(51) Int Cl.:
**H04L 27/26** *(2006.01)*    **H04L 25/03** *(2006.01)*

(21) Numéro de dépôt: **16825839.0**

(22) Date de dépôt: **13.12.2016**

(86) Numéro de dépôt international:
**PCT/FR2016/053361**

(87) Numéro de publication internationale:
**WO 2017/103423 (22.06.2017 Gazette 2017/25)**

(54) **PRÉCOMPENSATION D'INTERFÉRENCE INDUITE PAR UNE MODULATION OFDM/OQAM À UNE CADENCE SUPÉRIEURE À NYQUIST**

VORKOMPENSATION VON STÖRUNGEN, DIE DURCH EINE OFDM/OQAM-MODULATION INDUZIERT WERDEN, DIE SCHNELLER ALS NYQUIST IST

FASTER THAN NYQUIST OFDM/OQAM INDUCED INTERFERENCE PRECOMPENSATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2015 FR 1562842**

(43) Date de publication de la demande:
**24.10.2018 Bulletin 2018/43**

(73) Titulaire: **ORANGE**
**75015 Paris (FR)**

(72) Inventeurs:
• **LAHBABI, Naila**
**94310 Orly (FR)**
• **LIN, Hao**
**35510 Cesson-Sevigne (FR)**
• **SIOHAN, Pierre**
**35200 Rennes (FR)**

(74) Mandataire: **Vidon Brevets & Stratégie**
**16B, rue de Jouanet**
**BP 90333**
**35703 Rennes Cedex 7 (FR)**

(56) Documents cités:
**WO-A2-2012/042490**

• **JAVAUDIN J-P ET AL: "Pilot-aided channel estimation for OFDM/OQAM", VTC 2003-SPRING. THE 57TH. IEEE SEMIANNUAL VEHICULAR TECHNOLOGY CONFERENCE. PROCEEDINGS. JEJU, KOREA, APRIL 22 - 25, 2003; [IEEE VEHICULAR TECHNOLGY CONFERENCE], NEW YORK, NY : IEEE, US, vol. 3, 22 avril 2003 (2003-04-22), pages 1581-1585, XP010862427, DOI: 10.1109/VETECS.2003.1207088 ISBN: 978-0-7803-7757-8**
• **RUSEK F ET AL: "Non Binary and Precoded Faster Than Nyquist Signaling", IEEE TRANSACTIONS ON COMMUNICATIONS, IEEE SERVICE CENTER, PISCATAWAY, NJ. USA, vol. 56, no. 5, 1 mai 2008 (2008-05-01), pages 808-817, XP011227217, ISSN: 0090-6778, DOI: 10.1109/TCOMM.2008.060075**
• **Naila Lahbabi, Hao Lin, Charbel Abdel Nour, Catherine Douillard, Pierre Sohan: "Sparse interference pre-cancellation for FTN-OQAM systems", European Wireless Conference 2016 , 18 mai 2016 (2016-05-18), pages 173-178, XP002761336, Extrait de l'Internet: URL:http://ieeexplore.ieee.org/document/74 99264/?arnumber=7499264&tag=1 [extrait le 2016-08-31]**
• **DINH-THUY PHAN-HUY ET AL: "Make-It-Real precoders for MIMO OFDM/OQAM without inter carrier inte", 2013 IEEE GLOBAL COMMUNICATIONS CONFERENCE (GLOBECOM), IEEE, 9 décembre 2013 (2013-12-09), pages 3920-3924, XP032605108, DOI: 10.1109/GLOCOM.2013.6831685**

EP 3 391 605 B1

- **YAMADA YUKI ET AL: "Faster-than-Nyquist signaling with non-uniform compression factors for OFDM/OQAM", 2015 INTERNATIONAL SYMPOSIUM ON INTELLIGENT SIGNAL PROCESSING AND COMMUNICATION SYSTEMS (ISPACS), IEEE, 9 novembre 2015 (2015-11-09), pages 520-525, XP032881224, DOI: 10.1109/ISPACS.2015.7432827**

**Description**

**1. Domaine de l'invention**

Le domaine de l'invention est celui des communications mettant en œuvre une modulation multiporteuse.

Plus précisément, l'invention propose une technique de modulation permettant une transmission de données au-delà de la cadence de Nyquist (en anglais FTN pour « Faster Than Nyquist ») pour des systèmes multiporteuses.

L'invention trouve notamment des applications dans le domaine des communications sans fil (DAB, DVB-T, WLAN, optique non guidée, etc.) ou filaires (xDSL, PLC, optique, etc.). Par exemple, l'invention trouve des applications dans le domaine des communications cellulaires, sur voix montante ou descendante, des communications entre dispositifs (en anglais D2D pour « Device to Device »), des communications à partir d'un réseau de réacheminement (en anglais « backhauling »), etc.

**2. Art antérieur**

Le principe des transmissions au-delà de la cadence de Nyquist a été présenté en 1975 par E. Mazo, dans le document « Faster-than-Nyquist signaling » (Bell. Syst. Tech. Journal, 54 :1451-1462).

Selon ce document, la transmission à la cadence de Nyquist peut s'illustrer en considérant la transmission d'une suite d'informations binaires indépendantes $\{a_n\}$ telles que $a_n = \pm 1$ par une impulsion de Nyquist :

$$g(t) = \frac{\sin(\pi t/T)}{(\pi t/T)}$$

Cette transmission peut s'effectuer sans interférences, et donc sans erreur, dans un canal de transmission de largeur $B$ (bande unilatérale), avec $T$ le temps de transmission d'un symbole tel que $T = 1/2B$. Dans le cas d'une transmission perturbée par un bruit additif, blanc et Gaussien (en anglais AWGN pour « Additive White Gaussian Noise »), le détecteur optimal, qui va minimiser la probabilité d'erreur bit, est réalisé avec l'utilisation en réception d'un filtre adapté à l'impulsion de Nyquist, i.e. $g(-t)$.

Ce système de transmission est orthogonal, c'est-à-dire qu'il vérifie la condition :

$$\int g(t - nT)g(t - n'T)dt = \delta_{n,n'}$$

où $\delta$ désigne le symbole de Kronecker.

Pour aller au delà de la cadence de Nyquist (FTN), sans modifier la puissance de transmission, il est possible de rapprocher les impulsions en les transmettant espacées d'une durée $T' < T$, autrement dit en compressant d'un facteur $\tau$ tel que $T' = \tau T$ avec $0 < \tau < 1$. On vérifie alors qu'au lieu de $BT = 1/2$, on a $BT' < 1/2$.

Une telle transmission FTN permet donc de réduire le temps de transmission pour un volume d'information donné ou, en d'autres termes, d'augmenter le volume d'information pour un temps de transmission donné.

Cependant, la transmission FTN génère toutefois de fortes interférences, comme illustré ci-après.

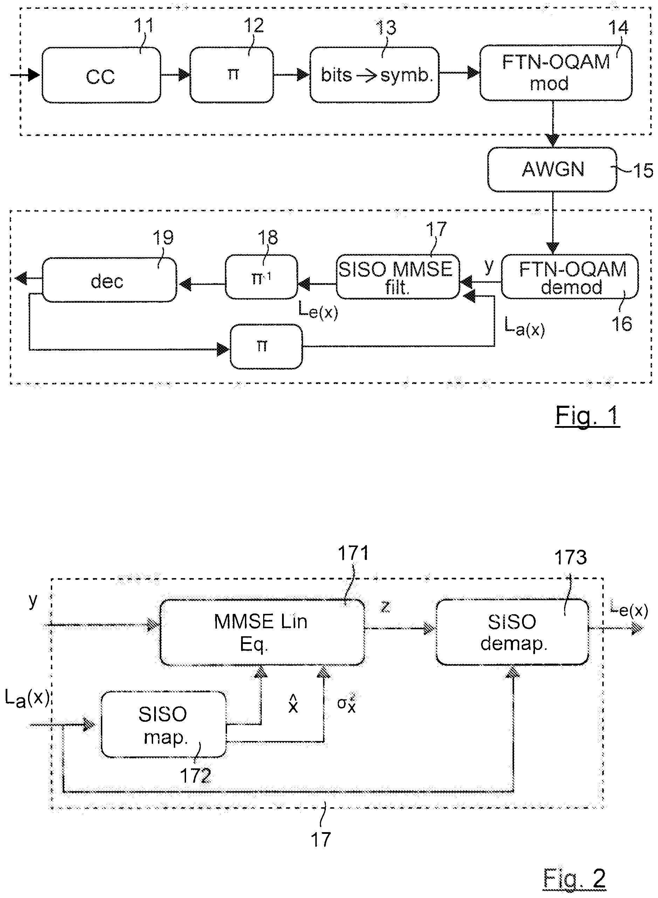

La figure 1 illustre un exemple de système de transmission pour les transmissions de type FTN/OFDM/OQAM, encore notées FTN/OQAM.

A l'émission, les bits d'un signal source sont d'abord codés par un codeur de canal CC 11, qui représente un code convolutif, et entrelacés par un entrelaceur $\pi$ 12. Les bits codés entrelacés sont ensuite mappés sur des symboles OQAM, dans un module de mappage 13, en utilisant par exemple la technique de mappage de Gray. Les porteuses du signal multiporteuses sont ensuite modulées avec les symboles OQAM dans un modulateur FTN-OQAM 14.

Le signal en sortie du modulateur FTN-OQAM 14 s'écrit :

$$s[k] = \sum_{n=0}^{\infty} g[k - nN_f] * \sum_{m=0}^{M-1} a_{m,n} e^{j\Phi_{m,n}} e^{j2\pi m\left(nN_f - \frac{D}{2}\right)} e^{\frac{j2\pi m(k-nN_f)}{M}}$$

avec :

  $g$ la forme d'onde utilisée ;

$M$ le nombre de porteuses ; $N_f = \left[\tau.\frac{M}{2}\right]$ arrondi, avec $\tau$ le facteur de compression ;

$L$ la longueur du filtre prototype $g$ ;

$D = L - 1$ un paramètre de retard introduit pour rendre le système causal ;

$a_{m,n}$ les symboles à transmettre, à valeurs réelles pour une modulation OQAM ;

$\Phi_{m,n}$ un terme de phase de la modulation FTN /OQAM, qui peut être égal à $\Phi_{m,n} = \frac{\pi}{2}(m+n)$

Après passage dans un canal AWGN 15, le signal reçu est d'abord démodulé par un démodulateur FTN-OQAM 16.

Le symbole reçu à l'instant $n_0$ sur la porteuse $m_0$ peut s'exprimer sous la forme suivante :

$$y_{m_0,n_0} = \Re\{\sum_k s[k]g[k-n_0 N_f]e^{-j\Phi_{m_0,n_0}}e^{-\frac{j2\pi m_0\left(k-\frac{D}{2}\right)}{M}}\} + w_{n_0}$$

soit encore :

$$y_{m_0,n_0} = a_{m_0,n_0} + \Re\{\sum_{n\neq n_0} a_{m_0,n}e^{\frac{j\pi}{2}(n-n_0)}\sum_k g[k-nN_f]g[k-n_0N_f]e^{\frac{j2\pi\left(k-\frac{D}{2}\right)(m-m_0)}{M}}\} +$$

$$\Re\{\sum_{m\neq m_0}\sum_n a_{m,n}e^{\frac{j\pi}{2}(m-m_0+n-n_0)}\sum_k g[k-nN_f]g[k-n_0N_f]e^{\frac{j2\pi\left(k-\frac{D}{2}\right)(m-m_0)}{M}}\} + w_{n_0}$$

Le premier terme de l'équation ($a_{m_0,n_0}$) est le symbole utile, le deuxième terme correspond aux interférences entre symboles (*ISI*), le troisième terme correspond aux interférences entre porteuses (*ICI$_{n_0}$*) et $w_{n_0}$ est le bruit Gaussien. Les *ICI* dépendent de l'instant temps.

$$y_{m_0,n_0} = a_{m_0,n_0} + ISI + ICI_{n_0} + w_{n_0}$$

Les symboles issus du démodulateur FTN-OQAM 16 sont ensuite filtrés par un filtre SISO MMSE 17, désentrelacés par un désentrelaceur $\pi^1$ 18, puis décodés par un décodeur 19.

On considère par exemple un récepteur basé sur le principe de la turbo-égalisation. Les informations issues du décodeur 19 sont donc utilisées pour mettre à jour le filtre SISO MMSE 17, en lui communiquant des informations de type logarithme du rapport de vraisemblance (LLRs) $L_a(x)$.

Plus précisément, comme le montre la figure 2, le module de traitement SISO MMSE 17 échange des informations douces (en anglais « soft ») avec le décodeur 19. Le module de traitement SISO MMSE 17 comprend :

-    un égaliseur linéaire de type MMSE 171, recevant le signal démodulé $y$ et des informations du décodeur 19, délivrant un signal égalisé $z$ ;

-    un module de mappage SISO 172 délivrant des symboles estimés $\hat{x}$ avec une variance $\sigma_{\hat{x}}^2$, à partir des LLRs a priori fournis par le décodeur à l'itération précédente, notés $L_a(x)$ ; et

-    un module de démappage SISO 173 calculant des LLRs extrinsèques $L_e(x)$, en prenant comme entrée le signal égalisé $z$.

Un schéma similaire peut être mis en œuvre pour les transmissions de type FTN/OFDM. Dans ce cas, le signal en sortie du modulateur FTN-OFDM s'écrit :

$$s[k] = \sum_{n=0}^{\infty}\sum_{m=0}^{M-1} a_{m,n}e^{\frac{j2\pi m\left(k-nN_f-\frac{M-1}{2}\right)}{M}}$$

en reprenant les mêmes notations que précédemment, avec $a_{m,n}$ les symboles à transmettre à valeurs complexes pour une modulation OFDM, et $N_f = [\tau. M]_{arrondi}$.

Le symbole reçu à l'instant $n_0$ sur la porteuse $m_0$ peut s'exprimer sous la forme suivante :

$$y_{m_0,n_0} = \sum_k s[k] e^{-\frac{j2\pi m_0\left(k-n_0 N_f-\frac{M-1}{2}\right)}{M}} + w_{n_0}$$

soit encore :

$$y_{m_0,n_0} =$$

$$a_{m_0,n_0} + \sum_{n_0-\left(\left[\frac{M}{N_f}\right]-1\right)}^{n_0+\left(\left[\frac{M}{N_f}\right]-1\right)} M e^{\frac{j2\pi N_f m_0(n-n_0)}{M}} a_{m_0,n} +$$

$$\sum_{m\neq m_0} \sum_{n_0-\left(\left[\frac{M}{N_f}\right]-1\right)}^{n_0+\left(\left[\frac{M}{N_f}\right]-1\right)} a_{m,n} \sum_k e^{\left(\frac{j2\pi\left(k-\frac{M-1}{2}\right)(m-m_0)}{M}\right)} e^{\frac{j2\pi N_f(n_0 m_0 - nm)}{M}} + w_{n_0}$$

Le premier terme de l'équation ($a_{m_0,n_0}$) est le symbole utile, le deuxième terme correspond aux interférences entre symboles (*ISI*), le troisième terme correspond aux interférences entre porteuses (*ICI*) et $w_{n_0}$ est le bruit Gaussien.

Le document WO 2012/042490 A2 (EADS SINGAPORE PTE LTD [SG]; EADS DEUTSCHLAND GMBH [DE]; HELLER CHRIST) 5 avril 2012 propose un précodage contre l'effet Doppler pour une transmission OFDM/OQAM.

Le document RUSEK F ET AL: "Non Binary and Precoded Faster Than Nyquist Signaling",IEEE TRANSACTIONS ON COMMUNICATIONS, traite des transmissions au-delà de la cadence Nyquist avec un précodage ISI.

Il existe donc un besoin pour une nouvelle technique de transmission FTN adaptée à un système multiporteuse ne présentant pas l'ensemble des inconvénients de l'art antérieur.

## 3. Exposé de l'invention

L'invention propose une solution nouvelle qui ne présente pas l'ensemble de ces inconvénients de l'art antérieur, sous la forme d'un procédé de génération d'un signal multiporteuse, tel que décrit dans la revendication 1.

Pour ce faire, l'invention propose de pré-coder certains symboles, avant leur transmission, pour annuler au moins partiellement l'interférence entre symboles et/ou entre porteuses susceptible d'affecter ce symbole au cours de la transmission.

Ainsi, plutôt que transmettre un symbole $a_{m,n}$, on propose de transmettre un symbole $c_{m,n}$, tel que :

$$c_{m,n} = a_{m,n} - \alpha ISI - \beta ICI_n$$

avec :

$$\alpha, \beta \in \mathbb{R}, 0 \leq \alpha, \beta \leq 1,$$

$\alpha \neq 0$ si on cherche à annuler au moins partiellement une interférence entre symboles *ISI* susceptible d'affecter ce symbole à la position ($m$, $n$), $\alpha = 0$ sinon, et

$\beta \neq 0$ si on cherche à annuler au moins partiellement une interférence entre porteuses *ICI* susceptible d'affecter ce symbole à la position ($m$, $n$), $\beta = 0$ sinon.

On affecte donc une valeur particulière à certains symboles, selon leur position (i.e. leur emplacement temps/fréquence) dans un motif de transmission (i.e. dans le bloc de symboles à transmettre), pour que le symbole reçu à cette position ne soit pas, ou peu, entaché d'interférence (i.e. perturbé par une interférence). On pré-annule donc au moins partiellement les interférences devant affecter un symbole, selon le motif de transmission utilisé.

En particulier, l'invention peut s'appliquer à des systèmes de modulations multiporteuses satisfaisant initialement soit la condition d'orthogonalité complexe (comme pour l'OFDM), soit la condition d'orthogonalité réelle (comme pour l'OFDM/OQAM). Les symboles peuvent donc être de type réels ou complexes.

Selon un mode de réalisation particulier, le signal multiporteuse est formé d'une succession temporelle de symboles multiporteuses destinés à être transmis à une cadence supérieure à la cadence de Nyquist.

L'invention propose ainsi de réduire les interférences générées par une transmission du signal multiporteuse au-delà de la cadence de Nyquist (FTN). Il est ainsi possible de réduire le temps de transmission pour un volume d'information donné.

De plus, la transmission FTN sous forme d'un multiplex fréquentiel permet de bénéficier des avantages des systèmes multiporteuses, comme la flexibilité du modulateur (par exemple la possibilité d'éteindre certaines porteuses) ou l'utilisation d'algorithmes efficaces pour l'implémentation du modem (par exemple à base de transformées de Fourier rapide : IFFT - en anglais « Inverse Fast Fourier Transform », ou FFT - en anglais « Fast Fourier Transform »).

La solution proposée offre ainsi une nouvelle technique de génération (ou construction) d'un signal multiporteuse permettant une augmentation du débit de transmission dans une bande de fréquence donnée, tout en permettant de réduire les interférences liées à la transmission FTN.

Selon un aspect spécifique de l'invention, le nombre de symbole pré-codés dudit premier sous-ensemble est inférieur ou égal au nombre de symboles non pré-codés dudit deuxième sous-ensemble.

En d'autres termes, le motif de transmission comprend moins de symboles pré-codés que de symboles non pré-codés, ou autant de symboles pré-codés que de symboles non pré-codés.

En effet, comme pour un symbole $a_{m,n}$, les symboles $a_{m,n+p}$ et $a_{m,n-p}$ participent aux *ISI*, et les symboles $a_{m+q,n}$ et $a_{m-q,n}$ participent aux *ICI*, avec $p, q \in \Re^+$, $p \in [-l, l]$ et $q \in [-l', l']$, on ne peut pas pré-annuler les interférences de tous les symboles.

Par exemple, on choisit de pré-coder la moitié du bloc de symboles transmis.

Selon un premier exemple, l'étape de modulation met en œuvre une modulation de type FTN-OQAM, et l'étape de pré-codage délivre, à partir d'un symbole $a_{m_0,n_0}$ de l'ensemble de symboles, un symbole pré-codé $c_{m_0,n_0}$ destiné à moduler une porteuse à l'emplacement $(m_0,n_0)$ dans le motif de transmission prédéterminé, tel que :

$$
c_{m_0,n_0}
= \begin{cases}
\left(a_{m_0,n_0} - \alpha ISI \left(si\ \beta = 0\ et\ n_0 = k\ mod\ (l+2)\ et\ n_0 = (k+1)mod(l+2), (k \in \mathbb{N}\ et\ k \le l+1)\right) \right. \\
\left(a_{m_0,n_0} - \beta ICI, \quad si\ (\alpha = 0\ et\ m_0 = k\ mod(l'+1), (k \in \mathbb{N}\ et\ k \le l'))\right) \\
\left(a_{m_0,n_0} - \alpha ISI - \beta ICI\ si\left(m_0 = k\ mod(l'+1), (k \in \mathbb{N}\ et\ k \le l')\right)\right. \\
et\ n_0 = k'\ mod\ (l+2)et\ n_0 = (k'+1)mod(l+2), (\ k' \in \mathbb{N}\ et\ k' \le l+1))
\end{cases}
$$

avec :

- mod l'opérateur modulo,
- $\alpha$ et $\beta$ des facteurs de sélection d'un type d'interférence à traiter, $\alpha, \beta \in \mathbb{R}$, $0 \le \alpha, \beta \le 1$,
- *ICI* un terme d'interférence entre porteuses déterminé sur ladite porteuse à l'emplacement $(m_0,n_0)$ et
- *ISI* un terme d'interférence entre symboles déterminé sur ladite porteuse à l'emplacement $(m_0,n_0)$.

Comme indiqué en relation avec l'art antérieur, pour une modulation FTN/OQAM, les termes d'interférences entre symboles *ISI* et entre porteuses *ICI* peuvent s'exprimer sous la forme suivante :

$$
ISI = \Re\{ \sum_{n \ne n_0} a_{m_0,n} e^{\frac{j\pi}{2}(n-n_0)} \sum_k g[k - nN_f]g[k - n_0 N_f]e^{\frac{j2\pi\left(k-\frac{D}{2}\right)(m-m_0)}{M}} \}
$$

$$
ICI = \Re\{ \sum_{m \ne m_0} \sum_n a_{m,n} e^{\frac{j\pi}{2}(m-m_0+n-n_0)} \sum_k g[k - nN_f]g[k - n_0 N_f]e^{\frac{j2\pi\left(k-\frac{D}{2}\right)(m-m_0)}{M}} \}
$$

avec $a_{m,n}$ ledit au moins un autre symbole dudit ensemble de symboles générant une interférence sur ledit symbole $a_{m_0,n_0}$.

Connaissant la forme des interférences affectant classiquement le symbole à l'emplacement $(m_0,n_0)$ dans le cadre d'une modulation FTN/OQAM, il est possible de pré-coder ce symbole en modifiant sa valeur à l'émission, pour pré-annuler au moins partiellement l'une et/ou l'autre de ces interférences, selon la position de ce symbole dans le motif de transmission, i.e. dans le bloc de symboles à transmettre.

On note que de telles expressions dépendent du paramètre $N_f$, et permettent donc de tenir compte du facteur

de compression $\tau$, puisque $N_f = \left[\tau.\dfrac{M}{2}\right]_{\text{arrondi}}$. $N_f$

Selon un deuxième exemple, l'étape de modulation met en œuvre une modulation de type FTN-OFDM, et l'étape de pré-codage délivre, à partir d'un symbole $a_{m_0,n_0}$ de l'ensemble de symboles, un symbole pré-codé $c_{m_0,n_0}$ destiné à moduler une porteuse à l'emplacement $(m_0,n_0)$ dans ledit motif de transmission prédéterminé, tel que :

$$c_{m_0,n_0}$$

$$= \begin{cases} \left(a_{m_0,n_0} - \alpha ISI \quad si\left(\beta = 0\ et\ n_0 = k\ mod\ (l'+1), (k \in \mathbb{N}\ et\ k \leq l')\right)\right) \\ \left(a_{m_0,n_0} - \beta ICI \quad si\ (\alpha = 0\ et\ m_0 = k\ mod(l+1), (k \in \mathbb{N}\ et\ k \leq l))\right) \\ \left(a_{m_0,n_0} - \alpha ISI - \beta ICI \quad si\left(m_0 = k\ mod(l+1), et\ n_0 = k'\ mod\ (l'+1), (k,k' \in \mathbb{N}, k \leq l\ et\ k' \leq l')\right)\right) \end{cases}$$

avec :

- mod l'opérateur modulo,
- $\alpha$ et $\beta$ des facteurs de sélection d'un type d'interférence à traiter, $\alpha, \beta \in \mathbb{R}$, $0 \leq \alpha, \beta \leq 1$,
- $ICI$ un terme d'interférence entre porteuses déterminé sur ladite porteuse à l'emplacement $(m_0,n_0)$ et
- $ISI$ un terme d'interférence entre symboles déterminé sur ladite porteuse à l'emplacement $(m_0,n_0)$.

Comme indiqué en relation avec l'art antérieur, pour une modulation FTN/OFDM, les termes d'interférences entre symboles $ISI$ et entre porteuses $ICI$ peuvent s'exprimer sous la forme suivante :

$$ICI = \sum_{m \neq m_0} \sum_{n_0 - \left(\left[\frac{M}{N_f}\right]-1\right)}^{n_0 + \left(\left[\frac{M}{N_f}\right]-1\right)} a_{m,n} \sum_k e^{\left(\frac{j2\pi\left(k-\frac{M-1}{2}\right)(m-m_0)}{M}\right)} e^{\frac{j2\pi N_f(n_0 m_0 - nm)}{M}}$$

$$ISI = \sum_{\substack{n=n_0 - \left(\left[\frac{M}{N_f}\right]-1\right) \\ n \neq n_0}}^{n_0 + \left(\left[\frac{M}{N_f}\right]-1\right)} M e^{\frac{j2\pi N_f m_0(n-n_0)}{M}} a_{m_0,n}$$

avec $a_{m,n}$ ledit au moins un autre symbole dudit ensemble de symboles générant une interférence sur le symbole $a_{m0,n0}$.

A nouveau, de telles expressions dépendent du paramètre $N_f$, et permettent donc de tenir compte du facteur de compression $\tau$, puisque $N_f = [\tau.\ M]_{\text{arrondi}}$ pour une modulation FTN/OFDM.

Connaissant la forme des interférences affectant classiquement le symbole à l'emplacement $(m_0,n_0)$ dans le cadre d'une modulation FTN/OFDM, il est possible de pré-coder ce symbole en modifiant sa valeur à l'émission, pour pré-annuler au moins partiellement l'une et/ou l'autre de ces interférences, selon la position de ce symbole dans le motif de transmission, i.e. dans le bloc de symboles à transmettre.

Selon une caractéristique particulière, le motif de transmission prédéterminé est sélectionné en tenant compte d'au moins un élément appartenant au groupe comprenant :

- un type de modulation mise en œuvre lors de ladite étape de modulation ;
- un type de filtre prototype utilisé lors de ladite étape de modulation ;
- un type de canal utilisé pour la transmission dudit signal multiporteuse.

Par exemple, le motif de transmission est différent pour une modulation FTN/OFDM ou pour une modulation FTN/OQAM.

De même, si on utilise un filtre prototype bien localisé en fréquence, comme le filtre FS (en anglais « Fréquence Selectivity ») avec une longueur quatre fois plus grande que le nombre de porteuses *M*, il y aura principalement de l'interférence entre symboles au cours de la transmission, donc on sélectionne un motif de transmission adapté à la pré-annulation d'interférence entre symboles. Si à l'inverse on utilise un filtre prototype bien localisé en temps, comme le filtre TFL, avec une longueur égale au nombre de porteuses *M*, il y aura principalement de l'interférence entre porteuses au cours de la transmission, donc on sélectionne un motif de transmission adapté à la pré-annulation d'interférence entre porteuses.

Dans un autre mode de réalisation, l'invention concerne un dispositif de génération d'un signal multiporteuse, tel que décrit dans la revendication 10.

Un tel dispositif de génération d'un signal multiporteuse est notamment adapté à mettre en œuvre le procédé de génération décrit précédemment. Il s'agit par exemple d'un émetteur d'une station de base d'un réseau cellulaire pour une communication sur voie descendante, ou d'un émetteur d'un terminal de type ordinateur, téléphone, tablette, boîtier décodeur (en anglais « set-top box »), etc., pour une communication sur voie montante. Ce dispositif pourra bien sûr comporter les différentes caractéristiques relatives au procédé de génération selon l'invention, qui peuvent être combinées ou prises isolément. Ainsi, les caractéristiques et avantages de ce dispositif sont les mêmes que ceux du procédé décrit précédemment. Par conséquent, ils ne sont pas détaillés plus amplement.

L'invention concerne également un procédé de réception d'un signal multiporteuse, el que décrit dans la revendication 6.

Un tel procédé de réception est notamment adapté à recevoir un signal multiporteuse généré selon le procédé de génération décrit ci-dessus. En particulier, un tel procédé est apte à recevoir un signal multporteuse émis à une cadence supérieure à la cadence de Nyquist.

Un tel signal multiporteuse comprend des symboles pré-codés, dont la valeur a été modifiée avant émission pour tenir compte d'une interférence générée par au moins un autre symbole de l'ensemble de symboles transmis au même instant ou à une même fréquence selon un motif de transmission temps/fréquence prédéterminé, et des symboles non pré-codés.

Les interférences affectant les symboles pré-codés en cours de transmission sont au moins partiellement annulées, grâce à la pré-annulation de ces interférences au pré-codage. Ces symboles pré-codés sont donc peu entachés d'interférence. En revanche, les symboles non pré-codés sont classiquement entachés d'interférence entre symboles et/ou entre porteuses.

Les symboles pré-codés peuvent donc être égalisés en premier, et les informations obtenues à partir de ces symboles pré-codés peuvent être utilisées pour égaliser les symboles non pré-codés.

Les caractéristiques et avantages de ce procédé de réception sont principalement les mêmes que ceux du procédé de génération d'un signal multiporteuse, et ne sont pas discutés plus en détails.

En particulier, le procédé de réception comprend également une étape de décodage des symboles pré-codés démodulés égalisés, délivrant un premier sous-ensemble de symboles estimés, et délivrant l'estimation d'une interférence affectant lesdits symboles non pré-codés démodulés, et une étape de décodage desdits symboles non pré-codés démodulés égalisés, délivrant un deuxième sous-ensemble de symboles estimés.

Selon un mode de réalisation particulier, l'étape de décodage desdits symboles non pré-codés démodulés égalisés délivre également une estimation d'une interférence affectant lesdits symboles pré-codés démodulés, et l'étape d'égalisation en temps et/ou en fréquence des symboles pré-codés démodulés tient compte de l'estimation de ladite interférence affectant lesdits symboles pré-codés démodulés.

On introduit ainsi une rétroaction entre l'égalisation des symboles pré-codés démodulés et des symboles non pré-codés démodulés, permettant d'améliorer l'estimation/reconstruction des symboles (QAM, OQAM) en réception.

Selon une autre caractéristique particulière, les étapes de décodage mettent en œuvre un algorithme de type Maximum a posteriori (MAP), MAP logarithmique (Log-MAP,) ou MAP logarithmique maximum (Max-Log-MAP).

Dans un autre mode de réalisation, l'invention concerne un dispositif de réception d'un signal multiporteuse, tel que décrit dans la revendication 11.

Un tel dispositif de réception est notamment adapté à mettre en œuvre le procédé de réception décrit précédemment. Il s'agit par exemple d'un récepteur d'une station de base d'un réseau cellulaire pour une communication sur voie montante, ou d'un récepteur d'un terminal de type ordinateur, téléphone, tablette, boîtier décodeur, etc., pour une communication sur voie descendante. Ce dispositif pourra bien sûr comporter les différentes caractéristiques relatives au procédé de génération d'un signal multiporteuse selon l'invention, qui peuvent être combinées ou prises isolément. Ainsi, les caractéristiques et avantages de ce dispositif sont les mêmes que ceux du procédé décrit précédemment. Par conséquent, ils ne sont pas détaillés plus amplement.

L'invention concerne encore un ou plusieurs programmes d'ordinateur comportant des instructions pour la mise en œuvre d'un procédé de génération d'un signal multiporteuse tel que décrit ci-dessus lorsque ce ou ces programmes sont exécutés par au moins un processeur, et un ou plusieurs programme d'ordinateur comportant des instructions pour la mise en œuvre d'un procédé de réception d'un signal multiporteuse tel que décrit ci-dessus lorsque ce ou ces programmes sont exécutés par au moins un processeur.

L'invention concerne aussi un support d'informations lisible par un ordinateur, et comportant des instructions d'un programme d'ordinateur tel que mentionné ci-dessus.

**4. Liste des figures**

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- les figures 1 et 2 présentent un exemple de système de transmission FTN selon l'art antérieur ;
- la figure 3 illustre les principales étapes mises en œuvre par un procédé de génération d'un signal multiporteuse selon un mode de réalisation particulier de l'invention ;
- la figure 4 illustre les principales étapes mises en œuvre par un procédé de réception d'un signal multiporteuse selon un mode de réalisation particulier de l'invention ;
- la figure 5 présente un exemple de système de transmission FTN selon un mode de réalisation particulier de l'invention ;
- les figures 6, 8, et 10 proposent des exemples de motifs de transmission permettant de réduire les interférences entre symboles, entre porteuses, ou entre symboles et entre porteuses respectivement, dans un système de transmission FTN/OQAM ;
- les figures 7, 9 et 11 présentent des exemples de récepteurs permettant de recevoir un signal multiporteuse utilisant le motif de transmission des figures 6, 8 et 10 respectivement ;
- les figures 12 et 13 proposent des exemples de motifs de transmission permettant de réduire les interférences entre symboles, ou entre symboles et entre porteuses, respectivement, dans un système de transmission FTN/OFDM ;
- les figures 14 et 15 illustrent respectivement la structure simplifiée d'un émetteur mettant en œuvre une technique de génération d'un signal multiporteuse, et un récepteur mettant en œuvre une technique de réception selon un mode de réalisation particulier de l'invention.

**5. Description d'un mode de réalisation de l'invention**

*5.1 Principe général*

Le principe général de l'invention repose sur le pré-codage d'au moins un symbole modulant une porteuse d'un signal multiporteuse, en modifiant sa valeur pour prendre en compte, à l'émission, une interférence entre symboles $ISI$ et/ou entre porteuses $ICI_n$ affectant normalement ce symbole. L'invention propose ainsi de pré-annuler au moins partiellement une interférence entre symboles et/ou entre porteuses pour au moins un symbole.

Une telle technique peut en particulier être mise en œuvre pour une transmission des données à une cadence supérieure à la cadence de Nyquist.

On propose donc selon l'invention de pré-annuler au moins partiellement, à l'émission, les interférences $ISI$ et $ICI_n$, puisqu'elles sont connues par l'émetteur. Ainsi, au lieu de transmettre des symboles $a_{m,n}$ , on peut transmettre des symboles pré-codés $c_{m,n}$ tels que :

$$c_{m,n} = a_{m,n} - \alpha ISI - \beta ICI_n$$

On note tout d'abord que pour un symbole $a_{m,n}$, les symboles $a_{m,n+p}$ et $a_{m,n-p}$ participent aux $ISI$, et les symboles $a_{m+q,n}$ et $a_{m-q,n}$ participent aux $ICI$, avec $p, q \in \Re^+$, $p \in [-l, l]$ et $q \in [-l', l']$. On ne peut donc pas pré-coder l'ensemble des symboles, i.e. pré-annuler les interférences de tous les symboles.

Les valeurs de $l$ et $l'$ peuvent être déterminées à partir d'au moins un élément appartenant au groupe comprenant : la longueur du filtre prototype utilisé, le facteur de compression $\tau$ et le type de modulation.

Afin de limiter la diminution de la puissance du symbole utile $a_{m,n}$, on introduit deux facteurs $\alpha$ et $\beta$ permettant de sélectionner le type d'interférence que l'on souhaite annuler au moins partiellement grâce au pré-codage, et on transmet un premier sous-ensemble de symboles pré-codés $c_{m,n} = a_{m,n} - \alpha ISI - \beta ICI_n$ sur une première partie de la trame. Sur le reste de la trame, on transmet un deuxième sous-ensemble de symboles non pré-codés $a_{m,n}$.

Cette technique de pré-annulation au moins partielle d'interférence peut être nommée technique de précodage SIPC, en anglais « Sparse Interference Pre-Cancellation ».

Cette technique présente de nombreux avantages.

En particulier, la comparaison des courbes du taux d'erreur binaire (BER) en fonction du rapport signal à bruit (SNR) pour un système FTN/OQAM avec et sans pré-codage montre une convergence plus rapide du système avec pré-codage. Par exemple, dans le cas d'une modulation 64QAM, le système commence à converger dès l'itération 3.

La technique de pré-codage selon l'invention permet également de diminuer la valeur de $\tau$ à 0,7 pour une modulation 16QAM, ou à 0,8 pour une modulation 64QAM, ce qui permet une transmission d'un plus grand volume d'information sur une période donnée.

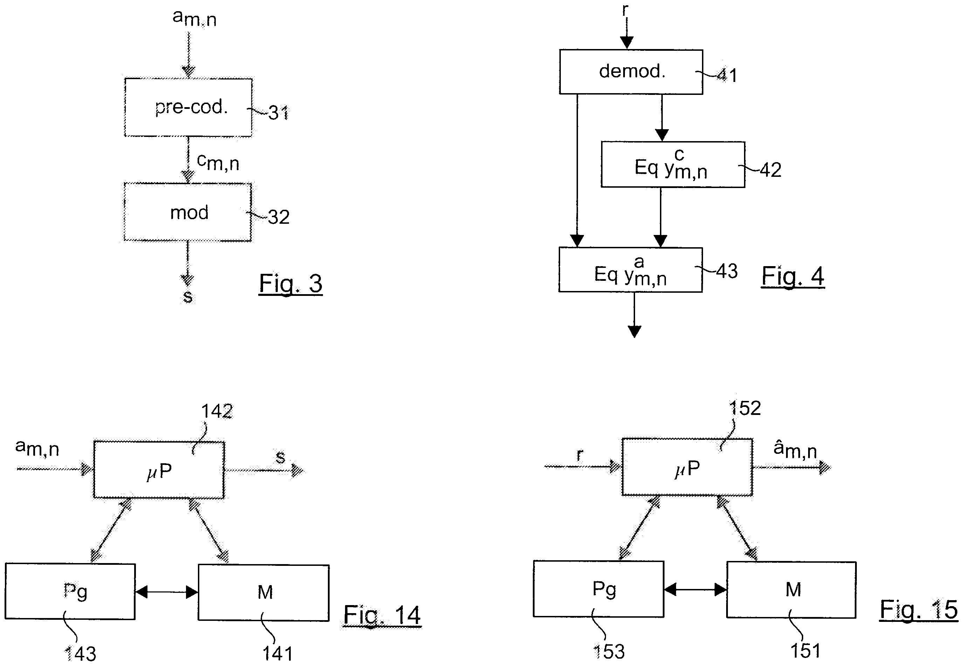

La figure 3 illustre les principales étapes mises en œuvre par un procédé de génération d'un signal multiporteuse selon un mode de réalisation de l'invention.

Un tel procédé reçoit en entrée un ensemble de symboles $a_{m,n}$, qui peuvent être à valeurs réelles ou à valeurs complexes.

Au cours d'une première étape 31, un premier sous-ensemble de symboles de l'ensemble de symboles est pré-codé. On obtient ainsi un premier sous-ensemble de K symboles pré-codés, notés $c_{m,n}$. Comme déjà indiqué, l'étape de pré-codage modifie la valeur d'un symbole du premier sous-ensemble pour tenir compte d'une interférence générée par au moins un autre symbole de l'ensemble de symboles destiné à être transmis au même instant ou à une même fréquence selon un motif de transmission temps/fréquence prédéterminé.

Au cours d'une deuxième étape 32, on module l'ensemble de porteuses, par exemple sous la forme d'une trame de MxN porteuses, à partir du premier sous-ensemble de symboles pré-codés et d'un deuxième sous-ensemble de symboles, non pré-codés, de l'ensemble de symboles, délivrant ledit signal multiporteuse s. L'étape de modulation module chaque porteuse de l'ensemble de porteuses par un symbole pré-codé du premier sous-ensemble ou par un symbole non pré-codé du deuxième sous-ensemble, selon le motif de transmission prédéterminé.

La trame de MxN porteuses est donc composée de symboles pré-codés et de symboles non pré-codés respectant un motif de transmission particulier.

La figure 4 illustre les principales étapes mises en œuvre par un procédé de réception selon un mode de réalisation de l'invention.

Un tel procédé reçoit en entrée le signal multiporteuse, après passage dans un canal de transmission.

Au cours d'une première étape 41, le signal multiporteuse reçu r est démodulé, délivrant un premier sous-ensemble de symboles démodulés correspondant aux symboles pré-codés, appelés symboles pré-codés démodulés $y_{m,n}^c$, et un deuxième sous-ensemble de symboles démodulés correspondant aux symboles non pré-codés, appelés symboles non pré-codés démodulés $y_{m,n}^a$.

Au cours d'une deuxième étape 42, on égalise en temps et/ou en fréquence les symboles pré-codés démodulés $y_{m,n}^c$.

Puis au cours d'une étape suivante 43, on égalise en temps et/ou en fréquence les symboles non pré-codés démodulés $y_{m,n}^a$, en tenant compte d'une estimation d'une interférence affectant les symboles non pré-codés démodulés, obtenue à partir des symboles non pré-codés démodulés, délivrant des symboles non pré-codés démodulés égalisés.

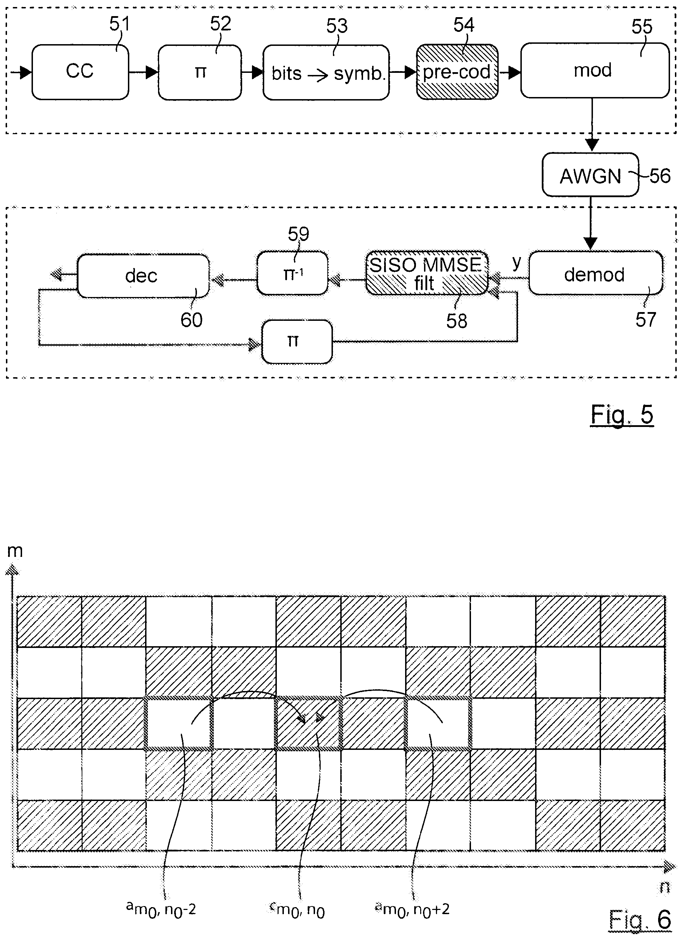

On présente ci-après, en relation avec la figure 5 des exemples de mise en œuvre de l'invention, pour une modulation de type FTN/OQAM ou FTN/OFDM.

*5.2 Premier exemple de réalisation : modulation de type FTN/OQAM*

La figure 5 illustre un exemple de système de transmission pour une transmission FTN/OQAM selon un mode de réalisation de l'invention.

A l'émission, les bits d'un signal source sont d'abord codés par un codeur de canal CC 51, qui représente par exemple un code convolutif, et entrelacés par un entrelaceur $\pi$ 52. Les bits codés entrelacés sont ensuite mappés sur des symboles OQAM, dans un module de mappage 53, en utilisant par exemple la technique de mappage de Gray. On obtient ainsi un ensemble de symboles.

Selon un mode de réalisation de l'invention, une partie de ces symboles, encore appelée premier sous-ensemble, est pré-codée dans un module de pré-codage 54, l'autre partie, encore appelée deuxième sous-ensemble, n'est pas pré-codée.

Par exemple, le module de pré-codage 54 délivre, pour chaque symbole $a_{m_0,n_0}$ du premier sous-ensemble, un symbole pré-codé $c_{m_0,n_0}$ destiné à moduler une porteuse à l'emplacement $(m_0, n_0)$ dans le motif de transmission prédéterminé, tel que :

$$c_{m_0,n_0}$$
$$= \begin{cases} (a_{m_0,n_0} - \alpha ISI \quad (si \ \beta = 0 \ et \ n_0 = k \ mod \ (l+2) \ et \ n_0 = (k+1)mod(l+2), \ (k \in N \ et \ k \le l+1)) \\ \quad (a_{m_0,n_0} - \beta ICI, \quad si \ (\alpha = 0 \ et \ m_0 = k \ mod(l'+1), (k \in N \ et \ k \le l')) \\ \quad (a_{m_0,n_0} - \alpha ISI - \beta ICI \ si(m_0 = k \ mod(l'+1), (k \in N \ et \ k \le l') \\ \quad et \ n_0 = k' \ mod \ (l+2) \ et \ n_0 = (k'+1)mod(l+2), ( \ k' \in N \ et \ k' \le l+1)) \end{cases}$$

Chacune de ces lignes correspond à un cas différent de précodage, permettant d'annuler partiellement l'*ISI* (SIPC en temps, première ligne), l'*ICI* (SIPC en fréquence, deuxième ligne), ou bien l'*ISI* et l'*ICI* (SIPC en temps-fréquence, troisième ligne).

Les autres symboles $a_{m,n}$, appartenant au deuxième sous-ensemble, ne sont pas pré-codés.

Les porteuses du signal multiporteuse sont ensuite modulées avec les symboles OQAM pré-codés du premier sous-ensemble et les symboles OQAM non pré-codés du deuxième sous-ensemble dans un modulateur FTN-OQAM 55.

Après passage dans un canal AWGN 56, le signal reçu est d'abord démodulé par un démodulateur FTN-OQAM 57.

Les symboles issus du démodulateur FTN-OQAM 57 sont ensuite filtrés par un filtre SISO MMSE 58 spécifique, désentrelacés par un désentrelaceur $\pi^1$ 59, puis décodés par un décodeur 60.

On considère par exemple un récepteur basé sur le principe de la turbo-égalisation. Les informations issues du décodeur 60 sont donc utilisées pour mettre à jour le filtre SISO MMSE 58, en lui communiquant des informations de type logarithme du rapport de vraisemblance (LLRs) $L_a(x)$ comme détaillé ci-après.

*A) Précodage en temps ($\alpha \neq 0$, $\beta = 0$)*

Comme déjà indiqué, on constate que, pour un symbole $a_{m,n}$, les symboles $a_{m,n+p}$ et $a_{m,n-p}$ participent aux ISI, et les symboles $a_{m+q,n}$ et $a_{m-q,n}$ participent aux *ICI*, avec $p, q \in \Re^+$, $p \in [\text{-}l, \ l]$ et $q \in [\text{-}l', \ l']$.

On cherche selon un premier exemple à annuler, ou à tout le moins réduire, uniquement les interférences entre symboles *ISI*, en pré-codant un premier sous-ensemble de symboles OQAM. On note cette technique pré-codage SIPC en temps. On note que, pour l'annulation ou la réduction de l'*ISI*, sur chaque porteuse $m$, on peut choisir les positions des symboles à pré-coder indépendamment des autres porteuses.

Comme illustré en figure 6, on considère selon ce premier exemple un motif de transmission correspondant à une alternance en temps de deux symboles pré-codés, hachurés, et de deux symboles non pré-codés, non hachurés, et une alternance en fréquence d'un symbole pré-codé, hachuré, et d'un symbole non pré-codé, non hachuré, pour réduire l'interférence entre symboles.

Plus précisément, on suppose que, pour un symbole $a_{m_0,n_0}$ à l'instant $n_0$ et à la porteuse $m_0$, les *ISI* sont engendrées principalement par les deux symboles voisins $a_{m_0,n_0+2}$ et $a_{m_0,n_0-2}$. On choisit donc de placer deux symboles pré-codés consécutifs pour chaque valeur de m, en alternant deux symboles pré-codés et deux symboles non pré-codés. On choisit également d'alterner les positions des symboles pré-codés pour m paire et pour m impaire. En effet, pour un symbole $a_{m_0,n_0}$ à l'instant $n_0$ et à la porteuse $m_0$, les interférences engendrées par la porteuse $m_0 + 1$ et $m_0 - 1$ décroissent en fonction de $n$.

On note que si l'on considère que les *ISI* sont engendrées principalement par les quatre symboles voisins $a_{m_0,n_0+4}$, $a_{m_0,n_0+2}$, $a_{m_0,n_0-2}$, et $a_{m_0,n_0-4}$, on choisit de placer deux symboles pré-codés consécutifs pour chaque valeur de $m$, en alternant deux symboles pré-codés et quatre symboles non pré-codés. On conserve une alternance des positions des symboles pré-codés pour $m$ paire et pour $m$ impaire.

Comme indiqué ci-dessus, on pré-code un premier sous-ensemble de symboles au cours d'une étape de pré-codage 54 pour annuler, ou à tout le moins réduire, l'interférence entre symboles :

$$c_{m,n} = a_{m,n} - \alpha ISI$$

avec, pour une modulation FTN/OQAM :

$$ISI = \Re\{\sum_{n \neq n_0} a_{m_0,n} e^{\frac{j\pi}{2}(n-n_0)} \sum_{k} g[k - nN_f]g[k - n_0 N_f]e^{\frac{j2\pi\left(k-\frac{D}{2}\right)(m-m_0)}{M}}\}$$

en reprenant les notations présentées avec les modulations FTN/OQAM selon l'art antérieur.

Si l'on suppose que, pour un symbole $a_{m_0,n_0}$, les ISI sont engendrées principalement par les deux symboles voisins $a_{m_0,n_0+2}$ et $a_{m_0,n_0-2}$, le canal équivalent des *ISI* peut être représenté par $h = [h_{-1}\ 0\ 10\ h_1]$, avec $h_{-1} = h_1$ pour un canal symétrique. Si l'on suppose que les *ISI* sont engendrés par quatre symboles voisins, le canal équivalent des *ISI* peut être représenté par $h = [h_2\ 0\ h_1\ 0\ 1\ 0\ h_1\ 0\ h_2]$. On note que les symboles aux positions *n* impaires ne contribuent pas aux *ISI* car la modulation OQAM prend la partie réelle du signal reçu.

En reprenant l'exemple de la figure 6, le symbole $a_{m_0,n_0}$ à la position $(m_0,n_0)$ est pré-codé pour tenir compte des *ISI*. Considérant le modèle de canal équivalent des *ISI,* le symbole pré-codé $c_{m_0,n_0}$ à la position $(m_0, n_0)$ est tel que :

$$c_{m_0,n_0} = a_{m_0,n_0} - h_1 a_{m_0,n_0-2} - h_1 a_{m_0,n_0+2}$$

Le signal multiporteuse comprend donc des porteuses modulées par des symboles pré-codés, et des porteuses modulées par des symboles non pré-codés.

On remarque que la puissance des porteuses modulées par des symboles pré-codés est inférieure à la puissance des porteuses modulées par des symboles non pré-codés.

A la réception, sans prendre en compte les *ICI* et le bruit, le symbole pré-codé reçu à la position $(m_0, n_0)$ après démodulation, noté $y^c_{m_0,n_0}$, est tel que :

$$y^c_{m_0,n_0} = c_{m_0,n_0} + h_1 a_{m_0,n_0-2} + h_1 a_{m_0,n_0+2} = a_{m_0,n_0}$$

Sans prendre en compte les *ICI* et le bruit, un symbole non pré-codé reçu à la position $(m_i, n_i)$ après démodulation, noté $y^a_{m_i,n_i}$, est tel que :

$$y^a_{m_i,n_i} = a_{m_i,n_i} + h_1 c_{m_i,n_i-2} + h_1 c_{m_i,n_i+2}$$

$$y^a_{m_i,n_i} = a_{m_i,n_i} + h_1 a_{m_i,n_i-2} - h_1^2 a_{m_i,n_i-4} - h_1^2 a_{m_i,n_i} + h_1 a_{m_i,n_i+2} - h_1^2 a_{m_i,n_i}$$
$$- h_1^2 a_{m_i,n_i+4}$$

$$y^a_{m_i,n_i} = (1 - 2*h_1^2) a_{m_i,n_i} + h_1 a_{m_i,n_i-2} - h_1^2 a_{m_i,n_i-4} + h_1 a_{m_i,n_i+2} - h_1^2 a_{m_i,n_i+4}$$

On constate ici une diminution de la puissance du symbole utile $a_{m_i,n_i}$ représentée par le facteur $(1 - 2*h_1^2)$, partiellement compensée par l'introduction des facteurs de sélection $\alpha$ et $\beta$.

On égalise donc d'abord les symboles pré-codés démodulés, puis ensuite les symboles non pré-codés démodulés, en tenant compte d'une interférence affectant les symboles non pré-codés déterminée à partir de l'égalisation des symboles pré-codés.

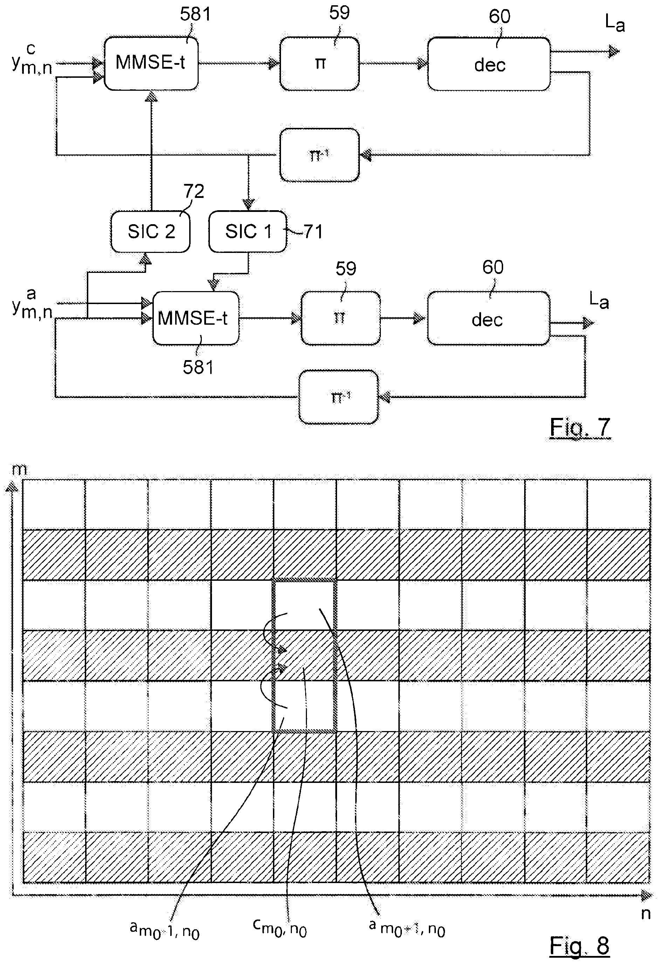

La figure 7 illustre un exemple de récepteur selon un mode de réalisation de l'invention, mettant en œuvre au moins une itération de décodage.

Au cours d'une première itération de décodage, on égalise les symboles pré-codés démodulés $y^c_{m,n}$ avec un égaliseur MMSE-t 581 en temps. Les symboles pré-codés démodulés égalisés sont entrelacés par l'entrelaceur 59, et décodés par le décodeur 60. Par exemple, un tel décodeur est de type Max-log-MAP fournissant des informations soft en termes de maximum de rapport de vraisemblance (LLR), que l'on utilise pour construire des symboles soft. On obtient donc une première estimation des symboles pré-codés $\hat{y}^c_{m,n}$ en sortie de la première itération de décodage ($= \hat{a}_{m,n}$ aux postions correspondant aux symboles pré-codés).

Ces informations en termes de LLR permettent à un premier module d'annulation d'interférence SIC 1 71 (« Soft Interference Cancellation ») du récepteur de déterminer l'interférence entre symboles générée par les symboles pré-codés sur les symboles non pré-codés sur une même porteuse d'indice *m*. Ce module SIC 1 71 détermine aussi l'interférence entre porteuses générée par les symboles des autres porteuses sur la porteuse d'indice m. Le récepteur permet donc également d'annuler, ou de réduire, une partie de l'interférence.

Au cours de la première itération de décodage, on égalise ensuite les symboles non pré-codés démodulés $y_{m,n}^a$ avec un égaliseur MMSE-t 581 en temps, en tenant compte de l'interférence déterminée par le premier module SIC 1 71. Les symboles non pré-codés démodulés égalisés sont entrelacés par l'entrelaceur 59, et décodés par le décodeur 60. Par exemple, un tel décodeur est de type Max-log-MAP. On obtient donc une première estimation des symboles non pré-codés $\hat{y}_{m,n}^a$ en sortie de la première itération de décodage (= $\hat{a}_{m,n}$ aux postions correspondant aux symboles non pré-codés).

Ces informations en termes de LLR permettent à un deuxième module d'annulation d'interférence SIC 2 72 du récepteur de déterminer l'interférence entre porteuses générée par les symboles non pré-codés sur les symboles pré-codés.

Au cours d'une deuxième itération de décodage, on affine l'égalisation des symboles pré-codés estimés $\hat{y}_{m,n}^c$ avec l'égaliseur MMSE-t 581 en temps, qui tient compte de l'interférence déterminée par le deuxième module SIC 2 72. On itère les étapes d'entrelacement et de décodage, pour obtenir une estimation affinée des symboles pré-codés en sortie de la deuxième itération de décodage et une estimation affinée de l'interférence générée par les symboles pré-codés sur les symboles non pré-codés.

On affine également l'égalisation des symboles non pré-codés estimés $\hat{y}_{m,n}^a$ au cours d'une deuxième itération de décodage, avec l'égaliseur MMSE-t 581 en temps, en tenant compte de l'estimation affinée de l'interférence générée par les symboles pré-codés sur les symboles non pré-codés. On itère les étapes d'entrelacement et de décodage, pour obtenir une estimation affinée des symboles non pré-codés en sortie de la deuxième itération de décodage et une estimation affinée de l'interférence générée par les symboles non pré-codés sur les symboles pré-codés.

Plusieurs itérations peuvent être mises en œuvre, jusqu'à obtenir une convergence dans l'estimation des symboles pré-codés $\hat{y}_{m,n}^c$ et non pré-codés $\hat{y}_{m,n}^a$, encore notés $\hat{a}_{m,n}$.

On note que pour une égalisation MMSE-t en temps, le module SIC (premier ou deuxième module SIC) supprime, ou à tout le moins réduit, les interférences *ICI* en utilisant les symboles OQAM estimés $\hat{a}_{m,n}$ :

$$\hat{y}_{m_0,n_0} = y_{m_0,n_0}$$

$$-\Re\left\{\sum_{m\neq m_0}\sum_n \hat{a}_{m,n} e^{\frac{j\pi}{2}(m-m_0+n-n_0)}\sum_k g[k-nN_f]g[k \right.$$

$$\left. -n_0 N_f] e^{\frac{j2\pi\left(k-\frac{D}{2}\right)(m-m_0)}{M}}\right\}$$

On note également que le filtre d'égalisation MMSE utilisé par l'égaliseur MMSE-t 581 diffère de celui utilisé pour une modulation FTN/OQAM classique. Les filtres d'égalisation des symboles pré-codés démodulés et des symboles non pré-codés démodulés doivent donc être recalculés.

*B) Précodage en fréquence ($\alpha = 0$, $\beta \neq 0$)*

On cherche selon un deuxième exemple à annuler, ou à tout le moins réduire, uniquement les interférences entre porteuses *ICI_n*, en pré-codant un premier sous-ensemble de symboles OQAM. On note cette technique pré-codage SIPC en fréquence.

Comme illustré en figure 8, on considère selon ce deuxième exemple un motif de transmission correspondant, en temps, soit à une suite de symboles pré-codés, hachurés, soit à une suite de symboles non pré-codés, non hachurés, et, en fréquence, à une alternance d'un symbole pré-codé, hachuré, et d'un symbole non pré-codé, non hachuré, pour réduire l'interférence entre porteuses.

Plus précisément, on suppose que, pour un symbole $a_{m_0,n_0}$ à l'instant $n_0$ et à la porteuse $m_0$, les *ICI_n* sont engendrées principalement par les deux symboles voisins $a_{m_0+1,n_0}$ et $a_{m_0-1,n_0}$. On choisit d'alterner les positions des symboles pré-codés pour *m* paire et pour *m* impaire, pour réduire l'interférence entre porteuses.

Comme indiqué ci-dessus, on pré-code un premier sous-ensemble de symboles au cours d'une étape de pré-codage 54 pour annuler, ou à tout le moins réduire, l'interférence entre porteuses :

$$c_{m,n} = a_{m,n} - \beta ICI_n$$

avec, pour une modulation FTN/OQAM :

$$ICI_n = \Re\{\sum_{m \neq m_0} \sum_n a_{m,n} e^{\frac{j\pi}{2}(m-m_0+n-n_0)} \sum_k g[k - nN_f]g[k$$
$$- n_0 N_f]e^{\frac{j2\pi\left(k-\frac{D}{2}\right)(m-m_0)}{M}}$$

en reprenant les notations présentées avec les modulations FTN/OQAM selon l'art antérieur.

Le signal multiporteuse comprend donc des porteuses modulées par des symboles pré-codés, et des porteuses modulées par des symboles non-précodés.

A la réception, une fois le signal multiporteuse démodulé, on égalise les symboles pré-codés démodulés, puis ensuite les symboles non pré-codés démodulés, en tenant compte d'une interférence affectant les symboles non pré-codés déterminée à partir de l'égalisation des symboles pré-codés.

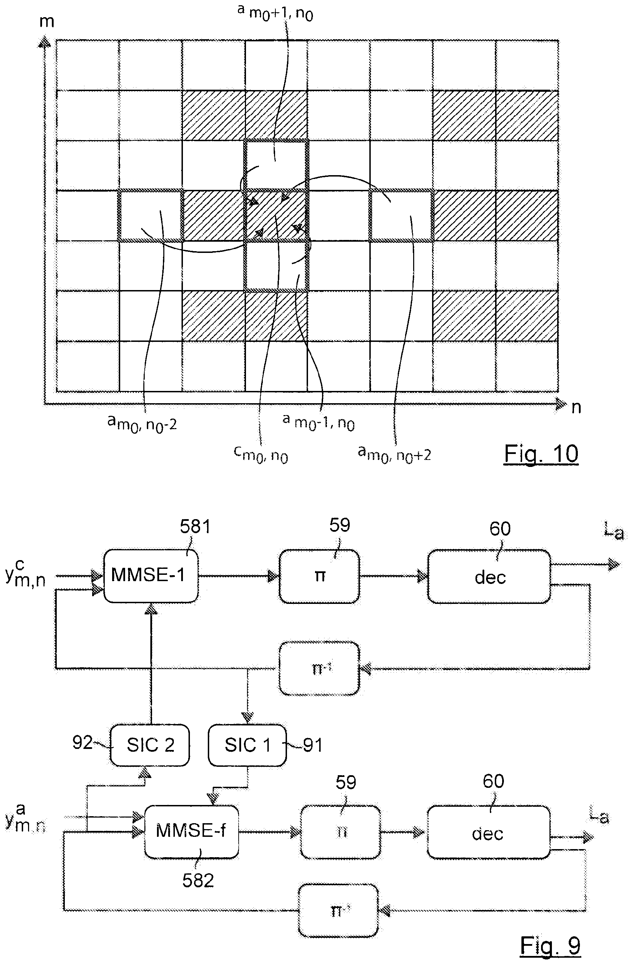

La figure 9 illustre un exemple de récepteur selon un mode de réalisation de l'invention, mettant en œuvre au moins une itération de décodage.

Les modules mis en œuvre pour estimer les symboles pré-codés et les symboles non pré-codés sont similaires à ceux illustrés en figure 7, en remplaçant l'égaliseur MMSE-t en temps utilisé pour égaliser les symboles non pré-codés démodulés par un égaliseur MMSE-f 582 en fréquence. En effet, comme le terme d'interférence entre porteuses $ICI_n$ dépend du temps, le canal équivalent en temps des symboles non pré-codés dépend du temps aussi. On choisit donc d'égaliser les symboles non pré-codés démodulés en fréquence (sur l'axe *m*). Le fonctionnement du récepteur n'est donc pas re-détaillé ici.

On note que pour une égalisation MMSE-f en fréquence, le module SIC 1 91 supprime, ou à tout le moins réduit, les interférences en utilisant les symboles OQAM estimés $\hat{a}_{m,n}$ :

$$\hat{y}_{m_0,n_0} = y_{m_0,n_0}$$
$$- \Re\left\{\sum_{n \neq n_0} \sum_m \hat{a}_{m,n} e^{\frac{j\pi}{2}(m-m_0+n-n_0)} \sum_k g[k - nN_f]g[k$$
$$- n_0 N_f]e^{\frac{j2\pi\left(k-\frac{D}{2}\right)(m-m_0)}{M}}\right\}$$

Le module SIC 2 92, comme le module SIC 2 72, supprime, ou à tout le moins réduit, les interférences entre porteuses générées par les porteuses modulées par des symboles non pré-codés sur les porteuses modulées par des symboles pré-codés.

*C) Précodage en temps et en fréquence ($\alpha \neq 0$, $\beta \neq 0$)*

On cherche selon un troisième exemple à annuler, ou à tout le moins réduire, les interférences entre symboles ISI et les interférences entre porteuses $ICI_n$, en pré-codant un premier sous-ensemble de symboles OQAM. On note cette technique pré-codage SIPC en temps-fréquence.

Comme illustré en figure 10, on considère selon ce troisième exemple un motif de transmission correspondant, en temps, à une alternance de deux symboles pré-codés de deux symboles non pré-codés, et, en fréquence, soit à une alternance d'un symbole pré-codé et d'un symbole non pré-codé, soit à une suite de symboles non pré-codés, pour réduire l'interférence entre symboles et entre porteuses.

Plus précisément, on suppose que, pour un symbole $a_{m_0,n_0}$ à l'instant $n_0$ et à la porteuse $m_0$, les *ISI* sont engendrées principalement par les deux symboles voisins $a_{m_0,n_0+2}$ et $a_{m_0,n_0-2}$. On choisit donc de placer deux symboles pré-codés consécutifs pour chaque valeur de m, en alternant deux symboles pré-codés et deux symboles non pré-codés. On suppose également que les $ICI_n$ sont engendrées principalement par les deux symboles voisins $a_{m_0+1,n_0}$ et $a_{m_0-1,n_0}$. On choisit donc d'alterner les positions des symboles pré-codés pour *m* paire et pour *m* impaire.

Comme indiqué ci-dessus, on pré-code un premier sous-ensemble de symboles au cours d'une étape de pré-codage 54 pour annuler, ou à tout le moins réduire, l'interférence entre symboles :

$$c_{m,n} = a_{m,n} - \alpha ISI - \beta ICI_n$$

en reprenant les valeurs définies précédemment pour l'*ISI* et l'*ICI$_n$* pour les transmissions FTN/OQAM.

Le signal multiporteuse comprend donc des porteuses modulées par des symboles pré-codés, et des porteuses modulées par des symboles non-précodés.

A la réception, une fois le signal multiporteuse démodulé, on égalise les symboles pré-codés démodulés, puis ensuite les symboles non pré-codés démodulés, en tenant compte d'une interférence affectant les symboles non précodés déterminée à partir de l'égalisation des symboles pré-codés.

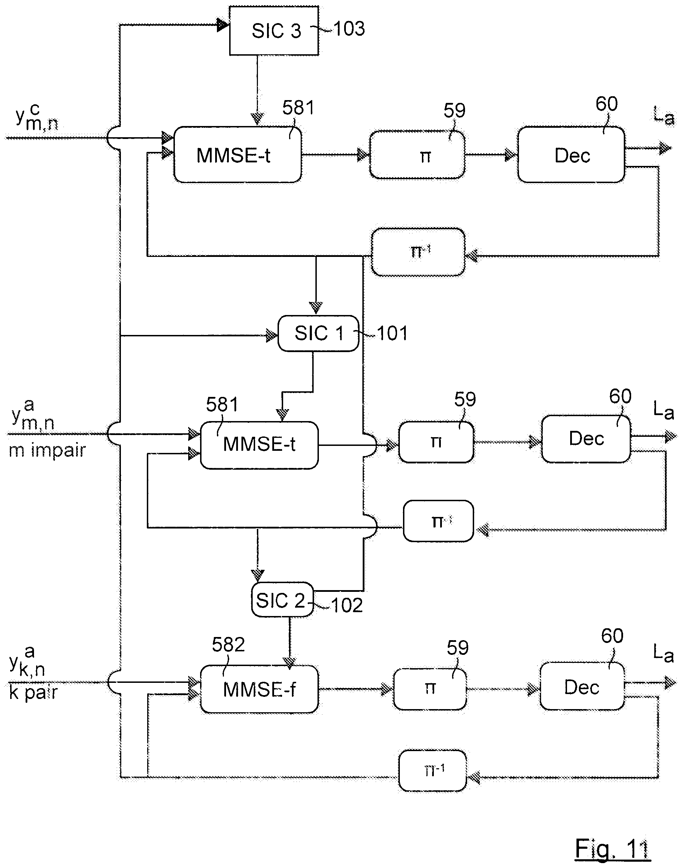

La figure 11 illustre un exemple de récepteur selon un mode de réalisation de l'invention, mettant en œuvre au moins une itération de décodage.

Au cours d'une première itération de décodage, on égalise les symboles pré-codés démodulés $y_{m,n}^c$ avec un égaliseur MMSE-t 581 en temps. Les symboles pré-codés démodulés égalisés sont entrelacés par l'entrelaceur 59, et décodés par le décodeur 60. Par exemple, un tel décodeur est de type Max-log-MAP fournissant des informations soft en termes de maximum de rapport de vraisemblance (LLR), que l'on utilise pour construire des symboles soft. On obtient donc une première estimation des symboles pré-codés $\hat{y}_{m,n}^c$ en sortie de la première itération de décodage (= $\hat{a}_{m,n}$ aux postions correspondant aux symboles pré-codés).

Ces informations en termes de LLR permettent à un premier module d'annulation d'interférence SIC 1 111 du récepteur de déterminer l'interférence entre symboles générée par les symboles pré-codés sur les symboles non précodés.

Au cours de la première itération de décodage, on égalise ensuite les symboles non pré-codés démodulés $y_{m,n}^a$ portés par une même fréquence que les symboles pré-codés, par exemple m impair, avec un égaliseur MMSE-t 581 en temps, en tenant compte de l'interférence déterminée par le premier module SIC 1 111. Les symboles non précodés démodulés égalisés avec *m* impair sont entrelacés par l'entrelaceur 59, et décodés par le décodeur 60. Par exemple, un tel décodeur est de type Max-log-MAP, que l'on utilise pour construire des symboles soft. On obtient donc une première estimation des symboles non pré-codés $\hat{y}_{m,n}^a$ avec *m* impair en sortie de la première itération de décodage (= $\hat{a}_{m,n}$ aux postions correspondant aux symboles non pré-codés avec *m* impair).

Ces informations en termes de LLR permettent à un deuxième module d'annulation d'interférence SIC 2 112 du récepteur de déterminer l'interférence entre porteuses générée par tous les symboles d'une porteuse d'indice *m* impair sur les symboles non pré-codés d'une porteuse d'indice *k* pair (le module SIC 2 utilise les symboles précodés estimés et les symboles non précodés estimés de la porteuse d'indice *m* impair pour annuler l'interférence qu'ils génèrent sur la porteuse d'indice *k* pair).

Au cours de la première itération de décodage, on égalise ensuite les symboles non pré-codés démodulés $y_{k,n}^a$ portés par une autre fréquence que les symboles pré-codés, par exemple *k* pair, avec un égaliseur MMSE-f 582 en fréquence, en tenant compte de l'interférence déterminée par le deuxième module SIC 2 112. Les symboles non pré-codés démodulés égalisés avec *k* pair sont entrelacés par l'entrelaceur 59, et décodés par le décodeur 60. Par exemple, un tel décodeur est de type Max-log-MAP. On obtient donc une première estimation des symboles non précodés $\hat{y}_{k,n}^a$ avec *k* pair en sortie de la première itération de décodage (= $\hat{a}_{m,n}$ aux postions correspondant aux symboles non pré-codés avec *m* pair).

Eventuellement, ces informations en termes de LLR permettent à un troisième module d'annulation d'interférence SIC 3 103 de déterminer l'interférence engendrée par les symboles non pré-codés de la porteuse d'indice *k* pair, sur les symboles pré-codés de la porteuse d'indice *m* impair.

Plusieurs itérations peuvent être mises en œuvre, jusqu'à obtenir une convergence dans l'estimation des symboles pré-codés $\hat{y}_{m,n}^c$ et non pré-codés $\hat{y}_{m,n}^a$ avec *m* pair et m impair, encore notés $\hat{a}_{m,n}$.

Comme indiqué ci-dessus, pour une égalisation MMSE-t en temps ou MMSE-f en fréquence, un module SIC supprime, ou à tout le moins réduit, les interférences en utilisant les symboles précédemment estimés $\hat{a}_{m,n}$.

*5.3 Deuxième exemple de réalisation : modulation de type FTN/OFDM*

Le système de transmission illustré en figure 5 peut être utilisé pour une transmission FTN/OFDM selon un mode de réalisation de l'invention, en remplaçant le modulateur OQAM 55 par un modulateur OFDM.

A l'émission, les bits d'un signal source sont d'abord codés par un codeur de canal CC, qui représente par exemple un code convolutif, et entrelacés par un entrelaceur $\pi$. Les bits codés entrelacés sont ensuite mappés sur des symboles QAM, dans un module de mappage, en utilisant par exemple la technique de mappage de Gray. On obtient ainsi un ensemble de symboles.

Selon un mode de réalisation de l'invention, une partie de ces symboles, encore appelée premier sous-ensemble, est pré-codée dans un module de pré-codage, l'autre partie, encore appelée deuxième sous-ensemble, n'est pas pré-codée.

Par exemple, le module de pré-codage délivre, pour chaque symbole $a_{m_0,n_0}$ du premier sous-ensemble, un symbole pré-codé $c_{m_0,n_0}$ destiné à moduler une porteuse à l'emplacement ($m_0$, $n_0$) dans le motif de transmission prédéterminé, tel que :

$$c_{m_0,n_0}$$

$$= \begin{cases} \left(a_{m_0,n_0} - \alpha ISI \;\; si \left(\beta = 0 \; et \; n_0 = k \; mod \, (l' + 1), (k \in \mathbb{N} \, et \, k \le l')\right)\right) \\ \left(a_{m_0,n_0} - \beta ICI \;\;\; si \left(\alpha = 0 \; et \; m_0 = k \; mod(l + 1), (k \in \mathbb{N} \, et \, k \le l)\right)\right) \\ \left(a_{m_0,n_0} - \alpha ISI - \beta ICI \; si\left(m_0 = k \; mod(l + 1), et \; n_0 = k' \; mod \, (l' + 1), (k, k' \in \mathbb{N}, k \le l \, et \, k' \le l')\right)\right) \end{cases}$$

Chacune de ces lignes correspond à un cas différent de précodage, permettant d'annuler partiellement l'*ISI* (SIPC en temps, première ligne), l'*ICI* (SIPC en fréquence, deuxième ligne), ou bien l'*ISI* et l'*ICI* (SIPC en temps-fréquence, troisième ligne).

Les autres symboles $a_{m,n}$, appartenant au deuxième sous-ensemble, ne sont pas pré-codés.

Les porteuses du signal multiporteuse sont ensuite modulées avec les symboles QAM pré-codés du premier sous-ensemble et les symboles QAM non pré-codés du deuxième sous-ensemble dans un modulateur FTN-OFDM.

Après passage dans un canal AWGN, le signal reçu est d'abord démodulé par un démodulateur FTN-OFDM.

Les symboles issus du démodulateur FTN-OFDM sont ensuite filtrés par un filtre SISO MMSE spécifique, désentrelacés par un désentrelaceur $\pi^{-1}$, puis décodés par un décodeur.

On considère par exemple un récepteur basé sur le principe de la turbo-égalisation. Les informations issues du décodeur sont donc utilisées pour mettre à jour le filtre SISO MMSE, en lui communiquant des informations de type logarithme du rapport de vraisemblance (LLRs) $L_a(x)$ comme détaillé ci-après.

*A) Précodage en temps ($\alpha \ne 0$, $\beta = 0$)*

Comme pour l'OFDM/OQAM, on cherche selon un premier exemple à annuler, ou à tout le moins réduire, uniquement les interférences entre symboles *ISI,* en pré-codant un premier sous-ensemble de symboles QAM. On note que, pour l'annulation ou la réduction de l'*ISI,* sur chaque porteuse *m*, on peut choisir les positions des symboles à précoder indépendamment des autres porteuses.

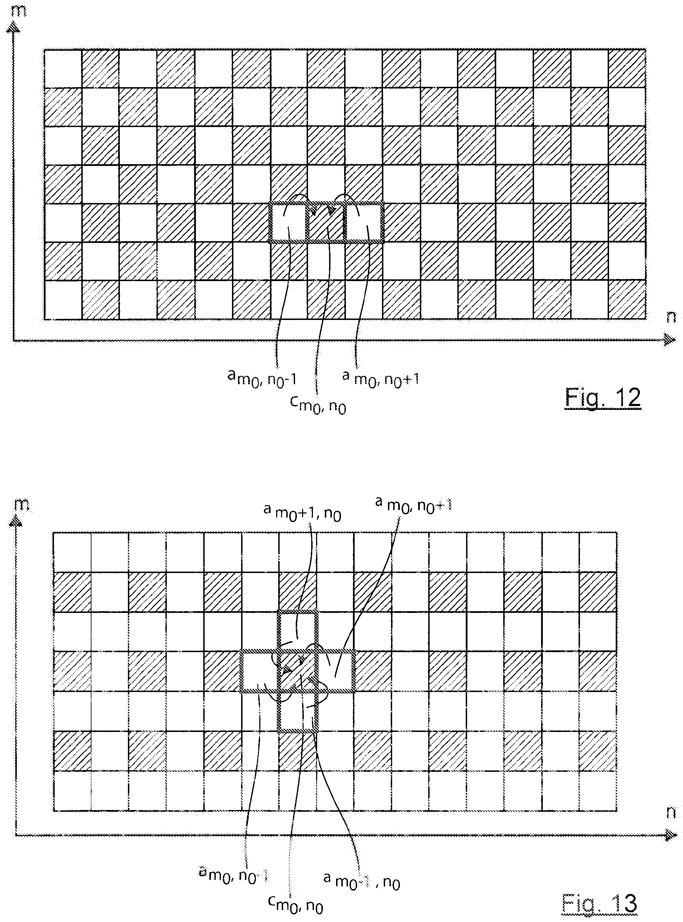

Comme illustré en figure 12, on considère selon ce premier exemple un motif de transmission correspondant à une alternance en temps d'un symbole pré-codé, hachurés, et d'un symbole non pré-codé, non hachuré, et une alternance en fréquence d'un symbole pré-codé, hachurés, et d'un symbole non pré-codé, non hachuré, pour réduire l'interférence entre symboles.

Comme indiqué ci-dessus, on pré-code un premier sous-ensemble de symboles au cours d'une étape de précodage pour annuler, ou à tout le moins réduire, l'interférence entre symboles :

$$c_{m,n} = a_{m,n} - \alpha ISI$$

avec, pour une modulation FTN/OFDM :

$$ISI = \sum_{\substack{n=n_0-(\left[\frac{M}{N_f}\right]-1) \\ n \neq n_0}}^{n_0+(\left[\frac{M}{N_f}\right]-1)} M e^{\frac{j2\pi N_f m_0(n-n_0)}{M}} a_{m_0,n}$$

en reprenant les notations présentées avec les modulations FTN/OFDM selon l'art antérieur.

Si l'on suppose que, pour un symbole $a_{m_0,n_0}$, les *ISI* sont engendrées principalement par les 21 symboles voisins $a_{m_0,n_0-p}$, pour $p \in [-l, l]$, où $l = \left[\frac{L}{N_f}\right]$ et [.] représente l'opérateur partie entière et L est la longueur du filtre prototype utilisé, le canal équivalent des ISI peut être représenté par $h = [h_{-l}, ..., h_{-1}, 1, h_1, ..., h_l]$. En considérant le modèle de canal équivalent des *ISI,* le symbole pré-codé $c_{m_0,n_0}$ à la position $(m_0, n_0)$ est tel que :

$$c_{m_0,n_0} = a_{m_0,n_0} - \sum_{i=-l, i\neq 0}^{l} h_i a_{m_0,n_0-i}$$

On considère par exemple, comme illustré en figure 12, que *l* = 1.

Le signal multiporteuse comprend donc des porteuses modulées par des symboles pré-codés, et des porteuses modulées par des symboles non pré-codés.

A la réception, sans prendre en compte les *ICI* et le bruit, le symbole pré-codé reçu à la position $(m_0, n_0)$ après démodulation, noté $y^c_{m_0,n_0}$, est tel que :

$$y^c_{m_0,n_0} = c_{m_0,n_0} + \sum_{i=-l, i\neq 0}^{l} h_i a_{m_0,n_0-i} = a_{m_0,n_0}$$

On égalise donc d'abord les symboles pré-codés démodulés, puis ensuite les symboles non pré-codés démodulés, en tenant compte d'une interférence affectant les symboles non pré-codés déterminée à partir de l'égalisation des symboles pré-codés.

Le récepteur mis en œuvre pour recevoir et décoder le signal multiporteuse est similaire à celui de la figure 7. Son fonctionnement n'est donc pas re-décrit.

*B) Précodage en fréquence ($\alpha$ = 0, $\beta \neq 0$)*

On cherche selon un deuxième exemple à annuler, ou à tout le moins réduire, uniquement les interférences entre porteuses $ICI_n$, en pré-codant un premier sous-ensemble de symboles QAM.

Le motif de transmission est dans ce cas similaire à celui illustré en figure 8, correspondant à une suite en temps de symboles pré-codés ou de symboles non pré-codés, et une alternance en fréquence d'un symbole pré-codé et d'un symbole non pré-codé, pour réduire l'interférence entre porteuses. On suppose également que, pour un symbole $a_{m_0,n_0}$ à l'instant $n_0$ et à la porteuse $m_0$, les $ICI_n$ sont engendrées principalement par les deux symboles voisins $a_{m_0+1,n_0}$ et $a_{m_0+1,n_0}$.

Comme indiqué ci-dessus, on pré-code un premier sous-ensemble de symboles au cours d'une étape de pré-codage pour annuler, ou à tout le moins réduire, l'interférence entre porteuses :

$$c_{m,n} = a_{m,n} - \beta ICI_n$$

avec, pour une modulation FTN/OFDM :

$$ICI_n = \sum_{m \neq m_0} \sum_{n_0-\left(\left[\frac{M}{N_f}\right]-1\right)}^{n_0+\left(\left[\frac{M}{N_f}\right]-1\right)} a_{m,n} \sum_k e^{\left(\frac{j2\pi\left(k-\frac{M-1}{2}\right)(m-m_0)}{M}\right)} e^{\frac{j2\pi N_f(n_0 m_0 - nm)}{M}}$$

en reprenant les notations présentées avec les modulations FTN/OFDM selon l'art antérieur.

Le signal multiporteuse comprend donc des porteuses modulées par des symboles pré-codés, et des porteuses modulées par des symboles non pré-codés.

A la réception, une fois le signal multiporteuse démodulé, on égalise les symboles pré-codés démodulés, puis ensuite les symboles non pré-codés démodulés, en tenant compte d'une interférence affectant les symboles non précodés déterminée à partir de l'égalisation des symboles pré-codés.

Le récepteur mis en œuvre pour recevoir et décoder le signal multiporteuse est similaire à celui de la figure 9. Son fonctionnement n'est donc pas re-décrit.

*C) Précodage en temps et en fréquence ($\alpha \neq 0$, $\beta \neq 0$)*

On cherche selon un troisième exemple à annuler, ou à tout le moins réduire, les interférences entre symboles ISI et les interférences entre porteuses $ICI_n$, en pré-codant un premier sous-ensemble de symboles QAM.

Comme illustré en figure 13, on considère selon ce troisième exemple un motif de transmission correspondant, en temps, soit à une alternance d'un symbole pré-codé et d'un symbole non pré-codé, soit à une suite de symboles non pré-codés, et, en fréquence, soit à une alternance d'un symbole pré-codé et d'un symbole non pré-codé, soit à une suite de symboles non pré-codés, pour réduire l'interférence entre symboles et entre porteuses.

Plus précisément, on suppose que, pour un symbole $a_{m_0,n_0}$ à l'instant $n_0$ et à la porteuse $m_0$, les *ISI* sont engendrées principalement par les deux symboles voisins $a_{m_0,n_0-1}$ et $a_{m_0,n_0+1}$. On suppose également que les $ICI_n$ sont engendrées principalement par les deux symboles voisins $a_{m_0+1,n_0}$ et $a_{m_0+1,n_0}$.

Comme indiqué ci-dessus, on pré-code un premier sous-ensemble de symboles au cours d'une étape de précodage pour annuler, ou à tout le moins réduire, l'interférence entre symboles :

$$c_{m,n} = a_{m,n} - \alpha ISI - \beta ICI_n$$

en reprenant les valeurs définies précédemment pour l'*ISI* et l'*$ICI_n$* pour les transmissions FTN/OFDM.

Le signal multiporteuse comprend donc des porteuses modulées par des symboles pré-codés, et des porteuses modulées par des symboles non pré-codés.

A la réception, une fois le signal multiporteuse démodulé, on égalise les symboles pré-codés démodulés, puis ensuite les symboles non pré-codés démodulés, en tenant compte d'une interférence affectant les symboles non précodés déterminée à partir de l'égalisation des symboles pré-codés.

Le récepteur mis en œuvre pour recevoir et décoder le signal multiporteuse est similaire à celui de la figure 11. Son fonctionnement n'est donc pas re-décrit.

*5.4 Dispositifs*

On présente finalement, en relation avec les figures 14 et 15 respectivement, la structure simplifiée d'un émetteur mettant en œuvre une technique de génération d'un signal multiporteuse selon un mode de réalisation de l'invention et la structure d'un récepteur mettant en œuvre une technique de réception d'un signal multiporteuse selon un mode de réalisation de l'invention.

Comme illustré en figure 14, un tel émetteur, ou dispositif de génération d'un signal multiporteuse, comprend une mémoire 141 comprenant une mémoire tampon, une unité de traitement 142, équipée par exemple d'un microprocesseur μP, et pilotée par une application ou un programme d'ordinateur 143, mettant en œuvre les étapes du procédé de génération selon un mode de réalisation de l'invention.

A l'initialisation, les instructions de code du programme d'ordinateur 143 sont par exemple chargées dans une mémoire RAM avant d'être exécutées par le processeur de l'unité de traitement 142. L'unité de traitement 142 reçoit en entrée des symboles $a_{m,n}$, réels ou complexes. Le microprocesseur de l'unité de traitement 142 met en œuvre les étapes du procédé de génération décrit précédemment, selon les instructions du programme d'ordinateur 143, pour générer un signal multiporteuse **s.**

Comme illustré en figure 15, un récepteur, ou dispositif de réception, comprend quant à lui une mémoire 151 comprenant une mémoire tampon, une unité de traitement 152, équipée par exemple d'un microprocesseur **μP,** et

EP 3 391 605 B1

piloté par une application ou un programme d'ordinateur 153, mettant en œuvre les étapes du procédé de réception selon un mode de réalisation de l'invention.

A l'initialisation, les instructions de code du programme d'ordinateur 153 sont par exemple chargées dans une mémoire RAM avant d'être exécutées par le processeur de l'unité de traitement 152. L'unité de traitement 152 reçoit en entrée un signal multiporteuse reçu r. Le microprocesseur de l'unité de traitement 152 met en œuvre les étapes du procédé de réception décrit précédemment, selon les instructions du programme d'ordinateur 153, pour estimer les symboles transmis.

## Revendications

1. **Procédé de génération** d'un signal multiporteuse, à partir d'un ensemble de symboles, ledit signal multiporteuse étant formé d'une succession temporelle de symboles multiporteuses destinés à être transmis à une cadence supérieure à la cadence de Nyquist, dite transmission FTN, **caractérisé en ce que** ledit procédé comprend :

   - une étape de pré-codage (31) d'un premier sous-ensemble de symboles dudit ensemble de symboles, délivrant un premier sous-ensemble de symboles pré-codés,
   ladite étape de pré-codage (31) modifiant la valeur d'un symbole dudit premier sous-ensemble pour tenir compte d'une interférence générée par la transmission FTN sur ce symbole par au moins un autre symbole dudit ensemble de symboles destiné à être transmis au même instant ou à une même fréquence selon un motif de transmission temps/fréquence prédéterminé, et
   - une étape de modulation (32) d'un ensemble de porteuses à partir dudit premier sous-ensemble de symboles pré-codés et d'un deuxième sous-ensemble de symboles, non pré-codés, dudit ensemble de symboles, délivrant ledit signal multiporteuse,
   ladite étape de modulation (32) modulant chaque porteuse dudit ensemble de porteuses par un symbole pré-codé dudit premier sous-ensemble ou par un symbole non pré-codé dudit deuxième sous-ensemble selon ledit motif de transmission prédéterminé.

2. Procédé selon la revendication 1, **caractérisé en ce que** le nombre de symbole pré-codés dudit premier sous-ensemble est inférieur ou égal au nombre de symboles non pré-codés dudit deuxième sous-ensemble.

3. Procédé selon l'une quelconque des revendications 1 et 2, **caractérisé en ce que** ladite étape de modulation (32) met en œuvre une modulation de type FTN-OQAM, et **en ce que** ladite étape de pré-codage (31) délivre, à partir d'un symbole $a_{m_0,n_0}$ de l'ensemble de symboles, un symbole pré-codé $c_{m_0,n_0}$ destiné à moduler une porteuse à l'emplacement $(m_0,n_0)$ dans ledit motif de transmission prédéterminé, tel que :

$$c_{m_0,n_0} = \begin{cases} (a_{m_0,n_0} - \alpha ISI \quad (si \; \beta = 0 \; et \; n_0 = k \; mod \; (l+2) \; et \; n_0 = (k+1)mod(l+2), \; (k \in \mathbb{N} \; et \; k \leq l+1)) \\ \left( a_{m_0,n_0} - \beta ICI, \quad si \; ( \alpha = 0 \; et \; m_0 = k \; mod(l'+1), (k \in \mathbb{N} \; et \; k \leq l')) \right) \\ \left( a_{m_0,n_0} - \alpha ISI - \beta ICI \; si \big(m_0 = k \; mod(l'+1), (k \in \mathbb{N} \; et \; k \leq l') \big) \right. \\ \left. et \; n_0 = k' \; mod \; (l+2) et \; n_0 = (k'+1)mod(l+2), \; ( \; k' \in \mathbb{N} \; et \; k' \leq l+1)) \right. \end{cases}$$

   avec :

   - mod l'opérateur modulo,
   - $\alpha$ et $\beta$ des facteurs de sélection d'un type d'interférence à traiter, $0 \leq \alpha, \beta \leq 1$
   - ICI un terme d'interférence entre porteuses déterminé sur ladite porteuse à l'emplacement $(m_0, n_0)$ et dû aux symboles $a_{m0+1+q,n}$ et $a_{m0-q,n}$,
   - ISI un terme d'interférence entre symboles déterminé sur ladite porteuse à l'emplacement $(m_0, n_0)$ et dû aux symboles $a_{m_0.n_0+p}$ et $a_{m_0,n_0-p}$,

   - $p,q \in \mathfrak{R}^+$, $p \in [-l, l]$ et $q \in [-l', l']$, $l, l' \in \mathbb{N}$.

4. Procédé selon l'une quelconque des revendications 1 et 2, **caractérisé en ce que** ladite étape de modulation (32) met en œuvre une modulation de type FTN-OFDM, et **en ce que** ladite étape de pré-codage (31) délivre, à partir d'un symbole $a_{m_0,n_0}$ de l'ensemble de symboles, un symbole pré-codé $c_{m_0,n_0}$ destiné à moduler une porteuse à l'emplacement $(m_0,n_0)$ dans ledit motif de transmission prédéterminé, tel que :

$$c_{m_0,n_0}$$

$$= \begin{cases} \left(a_{m_0,n_0} - \alpha ISI \quad si \left(\beta = 0 \; et \; n_0 = k \; mod \; (l'+1), (k \in \mathbb{N} \; et \; k \leq l')\right)\right) \\ \left(a_{m_0,n_0} - \beta ICI \quad si \left(\alpha = 0 \; et \; m_0 = k \; mod(l+1), (k \in \mathbb{N} \; et \; k \leq l)\right)\right) \\ \left(a_{m_0,n_0} - \alpha ISI - \beta ICI \; si\left(m_0 = k \; mod(l+1), \; et \; n_0 = k' \; mod \; (l'+1), (k,k' \in \mathbb{N}, k \leq l \; et \; k' \leq l')\right)\right) \end{cases}$$

avec :

- mod l'opérateur modulo,
- $\alpha$ et $\beta$ des facteurs de sélection d'un type d'interférence à traiter, $0 \leq \alpha, \; \beta \leq 1$,
- ICI un terme d'interférence entre porteuses déterminé sur ladite porteuse à l'emplacement $(m_0, n_0)$ et du aux symboles $a_{m_0+q,n}$ et $a_{m_0-q,n}$,
- ISI un terme d'interférence entre symboles déterminé sur ladite porteuse à l'emplacement $(m_0, n_0)$ et du aux symboles $a_{m_0,n_0+p}$ et $a_{m_0,n_0-p}$,
- $p, q \in \mathfrak{R}^+$, $p \in [-l, l]$, et $q \in [-l', l']$, $l, \; l' \in \mathbb{N}$.

5. Procédé selon l'une quelconque des revendications 1 à 4, **caractérisé en ce que** ledit motif de transmission prédéterminé est sélectionné en tenant compte d'au moins un élément appartenant au groupe comprenant :

- un type de modulation mise en œuvre lors de ladite étape de modulation ;
- un type de filtre prototype utilisé lors de ladite étape de modulation ;
- un type de canal utilisé pour la transmission dudit signal multiporteuse.

6. **Procédé de réception** d'un signal multiporteuse, délivrant un ensemble de symboles estimés, ledit signal multiporteuse étant formé d'une succession temporelle de symboles multiporteuses transmis à une cadence supérieure à la cadence de Nyquist, dite transmission FTN, **caractérisé en ce que** ledit procédé comprend :

- une étape de démodulation (41) d'un ensemble de porteuses formant ledit signal multiporteuse, délivrant un premier sous-ensemble de symboles pré-codés démodulés et un deuxième sous-ensemble de symboles non pré-codés démodulés,
- une étape d'égalisation (42) en temps et/ou en fréquence des symboles pré-codés démodulés, délivrant des symboles pré-codés démodulés égalisés,
- une étape d'égalisation (43) en temps et/ou en fréquence des symboles non pré-codés démodulés, tenant compte d'une estimation d'une interférence générée par la transmission FTN affectant lesdits symboles non pré-codés démodulés obtenue à partir desdits symboles pré-codés démodulés égalisés, délivrant des symboles non pré-codés démodulés égalisés.

7. Procédé selon la revendication 6, **caractérisé en ce qu'**il comprend également une étape de décodage desdits symboles pré-codés démodulés égalisés, délivrant un premier sous-ensemble de symboles estimés, et délivrant ladite estimation d'une interférence affectant lesdits symboles non pré-codés démodulés, et une étape de décodage desdits symboles non pré-codés démodulés égalisés, délivrant un deuxième sous-ensemble de symboles estimés.

8. Procédé selon la revendication 7, **caractérisé en ce que** ladite étape de décodage desdits symboles non pré-codés démodulés égalisés délivre également une estimation d'une interférence affectant lesdits symboles pré-codés démodulés, et **en ce que** ladite étape d'égalisation (43) en temps et/ou en fréquence des symboles pré-codés démodulés tient compte de l'estimation de ladite interférence affectant lesdits symboles pré-codés démodulés.

9. Procédé selon l'une quelconque des revendications 7 et 8, **caractérisé en ce que** lesdites étapes de décodage mettent en œuvre un algorithme de type Maximum a posteriori (MAP), MAP logarithmique (Log-MAP,) ou MAP logarithmique maximum (Max-Log-MAP).

10. **Dispositif de génération** d'un signal multiporteuse, à partir d'un ensemble de symboles, ledit signal multiporteuse étant formé d'une succession temporelle de symboles multiporteuses destinés à être transmis à une cadence supérieure à la cadence de Nyquist, dite transmission FTN, **caractérisé en ce que** ledit dispositif comprend :

- un module de pré-codage d'un premier sous-ensemble de symboles dudit ensemble de symboles, délivrant un premier sous-ensemble de symboles pré-codés,
ledit module de pré-codage modifiant la valeur d'un symbole dudit premier sous-ensemble pour tenir compte d'une interférence générée par la transmission FTN sur ce symbole par au moins un autre symbole dudit ensemble de symboles destiné à être transmis au même instant ou à une même fréquence selon un motif de transmission temps/fréquence prédéterminé, et
- un module de modulation d'un ensemble de porteuses à partir dudit premier sous-ensemble de symboles précodés et d'un deuxième sous-ensemble de symboles, non pré-codés, dudit ensemble de symboles, délivrant ledit signal multiporteuse,
ledit module de modulation modulant chaque porteuse dudit ensemble de porteuses par un symbole pré-codé dudit premier sous-ensemble ou par un symbole non pré-codé dudit deuxième sous-ensemble selon ledit motif de transmission prédéterminé.

11. **Dispositif de réception** d'un signal multiporteuse, délivrant un ensemble de symboles estimés, ledit signal multiporteuse étant formé d'une succession temporelle de symboles multiporteuses transmis à une cadence supérieure à la cadence de Nyquist, dite transmission FTN, **caractérisé en ce que** ledit dispositif comprend :

- un module de démodulation d'un ensemble de porteuses formant ledit signal multiporteuse, délivrant un premier sous-ensemble de symboles pré-codés démodulés et un deuxième sous-ensemble de symboles non pré-codés démodulés,
- un module d'égalisation en temps et/ou en fréquence des symboles pré-codés démodulés, délivrant des symboles pré-codés démodulés égalisés,
- une module d'égalisation en temps et/ou en fréquence des symboles non pré-codés démodulés, tenant compte d'une estimation de l'interférence générée par la transmission FTN affectant lesdits symboles non pré-codés démodulés obtenue à partir desdits symboles pré-codés démodulés égalisés, délivrant des symboles non précodés démodulés égalisés.

12. **Programme d'ordinateur** comportant des instructions pour la mise en œuvre d'un procédé selon la revendication 1 ou selon la revendication 6 lorsque ce programme est exécuté par un processeur.

**Patentansprüche**

1. Verfahren zur Erzeugung eines Mehrträgersignals ausgehend von einer Einheit von Symbolen, wobei das Mehrträgersignal von einer zeitlichen Folge von Mehrträgersymbolen gebildet wird, die dazu bestimmt sind, mit einer Rate höher als die Nyquist-Rate, FTN-Übertragung genannt, übertragen zu werden, **dadurch gekennzeichnet, dass** das Verfahren enthält:

- einen Vorcodierungsschritt (31) einer ersten Untereinheit von Symbolen der Einheit von Symbolen, der eine erste Untereinheit von vorcodierten Symbolen liefert, wobei der Vorcodierungsschritt (31) den Wert eines Symbols der ersten Untereinheit ändert, um eine durch die FTN-Übertragung an diesem Symbol durch mindestens ein anderes Symbol der Einheit von Symbolen erzeugte Interferenz zu berücksichtigen, das dazu bestimmt ist, zum gleichen Zeitpunkt oder mit der gleichen Frequenz gemäß einem vorbestimmten Zeit/Frequenz- Übertragungsmuster übertragen zu werden, und
- einen Modulationsschritt (32) einer Einheit von Trägern ausgehend von der ersten Untereinheit von vorcodierten Symbolen und einer zweiten Untereinheit von nicht vorcodierten Symbolen der Einheit von Symbolen, der das Mehrträgersignal liefert,
wobei der Modulationsschritt (32) jeden Träger der Einheit von Trägern durch ein vorcodiertes Symbol der ersten Untereinheit oder durch ein nicht vorcodiertes Symbol der zweiten Untereinheit gemäß dem vorbestimmten Übertragungsmuster moduliert.

2. Verfahren nach Anspruch 1, **dadurch gekennzeichnet, dass** die Anzahl von vorcodierten Symbolen der ersten Untereinheit niedriger als die oder gleich der Anzahl von nicht-vorcodierten Symbole der zweiten Untereinheit ist.

3. Verfahren nach einem der Ansprüche 1 und 2, **dadurch gekennzeichnet, dass** der Modulationsschritt (32) eine Modulation des Typs FTN-OQAM anwendet, und dass der Vorcodierungsschritt (31) ausgehend von einem Symbol $a_{m_0,n_0}$ der Einheit von Symbolen ein vorcodiertes Symbol $c_{m_0,n_0}$ liefert, das dazu bestimmt ist, einen Träger an der Stelle $(m_0, n_0)$ im vorbestimmten Übertragungsmuster zu modulieren, derart, dass gilt:

$$c_{m_0,n_0}$$
$$= \begin{cases} \left( a_{m_0,n_0} - \alpha ISI \left( wenn\ \beta = 0\ und\ n_0 = k\ mod(l+2)\ und\ n_0 = (k+1)mod(l+2), (k \in \mathbb{N}\ und\ k \le l+1) \right) \right) \\ \left( a_{m_0,n_0} - \beta ICI, wenn \left( \alpha = 0\ und\ m_0 = k\ mod(l'+1), (k \in \mathbb{N}\ und\ k \le l') \right) \right) \\ \left( a_{m_0,n_0} - \alpha ISI - \beta ICI\ wenn \left( m_0 = k\ mod(l'+1), (k \in \mathbb{N}\ und\ k \le l') \right) \right) \\ und\ n_0 = k'mod(l+2)und\ n_0 = (k'+1)mod(l+2), (k' \in \mathbb{N}\ und\ k' \le l+1) \end{cases}$$

mit:

- mod dem Modulo-Operator,
- $\alpha$ und $\beta$ Auswahlfaktoren eines zu verarbeitenden Interferenztyps, $0 \le \alpha, \beta \le 1$
- ICI einem bestimmten Interferenzterm zwischen Trägern an dem Träger an der Stelle $(m_0, n_0)$ und aufgrund der Symbole $a_{m_0+q,n}$ und $a_{m_0-q,n}$,
- ISI einem bestimmten Interferenzterm zwischen Symbolen an dem Träger an der Stelle $(m_0, n_0)$ und aufgrund der Symbole $a_{m_0,n_0+p}$ und $a_{m_0,n_0-p}$,
- $p, q \in \mathfrak{R}^+$, $p \in [-l, l]$ und $q \in [-l', l'], l, l' \in \mathbb{N}$.

4. Verfahren nach einem der Ansprüche 1 und 2, **dadurch gekennzeichnet, dass** der Modulationsschritt (32) eine Modulation des Typs FTN-OFDM anwendet, und dass der Vorcodierungsschritt (31) ausgehend von einem Symbol $a_{m_0,n_0}$ der Einheit von Symbolen ein vorcodiertes Symbol $c_{m_0,n_0}$ liefert, das dazu bestimmt ist, einen Träger an der Stelle $(m_0, n_0)$ im vorbestimmten Übertragungsmuster zu modulieren, derart, dass gilt:

$$c_{m_0,n_0}$$
$$= \begin{cases} \left( a_{m_0,n_0} - \alpha ISI\ wenn \left( \beta = 0\ und\ n_0 = k\ mod\ (l'+1), (k \in \mathbb{N}\ und\ k \le l') \right) \right) \\ \left( a_{m_0,n_0} - \beta ICI\ wenn \left( \alpha = 0\ und\ m_0 = k\ mod\ (l+1), (k \in \mathbb{N}\ und\ k \le l) \right) \right) \\ \left( a_{m_0,n_0} - \alpha ISI - \beta ICI\ wenn \left( m_0 = k\ mod(l+1), und\ n_0 = k'\ mod\ (l'+1), (k, k' \in \mathbb{N}, k \le l\ und\ k' \le l') \right) \right) \end{cases}$$

mit:

- mod dem Modulo-Operator,
- $\alpha$ und $\beta$ Auswahlfaktoren eines zu verarbeitenden Interferenztyps, $0 \le \alpha, \beta \le 1$,
- ICI einem bestimmten Interferenzterm zwischen Trägern an dem Träger an der Stelle $(m_0, n_0)$ und aufgrund der Symbole $a_{m_0+q,n}$ und $a_{m_0+q,n}$,
- ISI einem bestimmten Interferenzterm zwischen Symbolen an dem Träger an der Stelle $(m_0, n_0)$ und aufgrund der Symbole $a_{m_0,n_0+p}$ und $a_{m_0,n_0-p}$,
- $p, q \in \mathfrak{R}^+$, $p \in [-l, l]$ und $q \in [-l', l'], l, l' \in \mathbb{N}$.

5. Verfahren nach einem der Ansprüche 1 bis 4, **dadurch gekennzeichnet, dass** das vorbestimmte Übertragungsmuster unter Berücksichtigung mindestens eines Elements ausgewählt wird, das zu der Gruppe gehört, die enthält:

- einen Modulationstyp, der im Modulationsschritt angewendet wird;
- einen Prototyp-Filtertyp, der in dem Modulationsschritt verwendet wird;
- einen Kanaltyp, der für die Übertragung des Mehrträgersignals verwendet wird.

6. Verfahren zum Empfang eines Mehrträgersignals, das eine Einheit von geschätzten Symbolen liefert, wobei das Mehrträgersignal von einer zeitlichen Folge von Mehrträgersymbolen gebildet wird, die mit einer Rate höher als die Nyquist-Rate, FTN-Übertragung genannt, übertragen werden, **dadurch gekennzeichnet, dass** das Verfahren enthält:

- einen Schritt (41) der Demodulation einer Einheit von das Mehrträgersignal bildenden Trägern, der eine erste Untereinheit von demodulierten vorcodierten Symbolen und eine zweite Untereinheit von demodulierten nicht vorcodierten Symbolen liefert,
- einen Schritt (42) der Entzerrung in Zeit und/oder Frequenz der demodulierten vorcodierten Symbole, der entzerrte demodulierte vorcodierte Symbole liefert,
- einen Schritt (43) der Entzerrung in Zeit und/oder Frequenz der demodulierten nicht vorcodierten Symbole, unter Berücksichtigung einer Schätzung einer von der FTN-Übertragung erzeugten Interferenz, die sich auf die demodulierten nicht-vorcodierten Symbole auswirkt, die ausgehend von den entzerrten demodulierten vorcodierten Symbolen erhalten wird, der entzerrte demodulierte nichtvorcodierte Symbole liefert.

7. Verfahren nach Anspruch 6, **dadurch gekennzeichnet, dass** es ebenfalls einen Schritt der Decodierung der entzerrten demodulierten vorcodierten Symbole, der eine erste Untereinheit von geschätzten Symbolen liefert, und die Schätzung einer Interferenz liefert, die sich auf die demodulierten nicht-vorcodierten Symbole auswirkt, und einen Schritt der Decodierung der entzerrten, demodulierten, nicht vorcodierten Symbole enthält, der eine zweite Untereinheit von geschätzten Symbolen liefert.

8. Verfahren nach Anspruch 7, **dadurch gekennzeichnet, dass** der Schritt der Decodierung der entzerrten demodulierten nicht vorcodierten Symbole ebenfalls eine Schätzung einer Interferenz liefert, die sich auf die demodulierten vorcodierten Symbole auswirkt, und dass der Schritt der Entzerrung (43) in Zeit und/oder Frequenz der demodulierten vorcodierten Symbole die Schätzung der sich auf die demodulierten vorcodierten Symbole auswirkenden Interferenz berücksichtigt.

9. Verfahren nach einem der Ansprüche 7 und 8, **dadurch gekennzeichnet, dass** die Decodierungsschritte einen Algorithmus des Typs Maximum-a-posteriori (MAP), logarithmisch MAP (Log-MAP,) oder maximum logarithmisch MAP (Max-Log-MAP) verwenden.

10. Vorrichtung zur Erzeugung eines Mehrträgersignals ausgehend von einer Einheit von Symbolen, wobei das Mehrträgersignal von einer zeitlichen Folge von Mehrträgersymbolen gebildet wird, die mit einer höheren Rate als die Nyquist-Rate übertragen wird, FTN-Übertragung genannt, **dadurch gekennzeichnet, dass** die Vorrichtung enthält:

- ein Modul zur Vorcodierung einer ersten Untereinheit von Symbolen der Einheit von Symbolen, das eine erste Untereinheit von vorcodierten Symbolen liefert,
wobei das Vorcodierungsmodul den Wert eines Symbols der ersten Untereinheit ändert, um eine Interferenz zu berücksichtigen, die von der FTN-Übertragung durch mindestens ein anderes Symbol der Einheit von Symbolen an diesem Symbol erzeugt wird, das dazu bestimmt ist, zum gleichen Zeitpunkt oder mit einer gleichen Frequenz gemäß einem vorbestimmten Zeit/Frequenz-Übertragungsmuster übertragen zu werden, und
- ein Modul zur Modulation einer Einheit von Trägern ausgehend von der ersten Untereinheit von vorcodierten Symbolen und einer zweiten Untereinheit von nicht vorcodierten Symbolen der Einheit von Symbolen, das das Mehrträgersignal liefert,
wobei das Modulationsmodul jeden Träger der Einheit von Trägern durch ein vorcodiertes Symbol der ersten Untereinheit oder durch ein nicht vorcodiertes Symbol der zweiten Untereinheit gemäß dem vorbestimmten Übertragungsmuster moduliert.

11. Vorrichtung zum Empfang eines Mehrträgersignals, die eine Einheit von geschätzten Symbolen liefert, wobei das Mehrträgersignal von einer zeitlichen Folge von Mehrträgersymbolen gebildet wird, die mit einer höheren Rate als die Nyquist-Rate übertragen wird, FTN-Übertragung genannt, **dadurch gekennzeichnet, dass** die Vorrichtung enthält:

- ein Modul zur Demodulation einer Einheit von das Mehrträgersignal bildenden Trägern, das eine erste Untereinheit von demodulierten vorcodierten Symbolen und eine zweite Untereinheit von demodulierten nicht-vorcodierten Symbolen liefert,
- ein Modul zur Entzerrung in Zeit und/oder Frequenz der demodulierten vorcodierten Symbole, das entzerrte demodulierte vorcodierte Symbole liefert,
- ein Modul zur Entzerrung in Zeit und/oder Frequenz der demodulierten nicht-vorcodierten Symbole, das eine Schätzung der von der FTN-Übertragung erzeugten Interferenz berücksichtigt, die sich auf die demodulierten nicht-vorcodierten Symbole auswirkt, die ausgehend von den entzerrten demodulierten vorcodierten Symbolen erhalten wird, das entzerrte demodulierte nichtvorcodierte Symbole liefert.

**12.** Computerprogramm, das Anweisungen zur Durchführung eines Verfahrens nach Anspruch 1 oder nach Anspruch 6 aufweist, wenn dieses Programm von einem Prozessor ausgeführt wird.

**Claims**

1. Method of generating a multicarrier signal, from a set of symbols, said multicarrier signal being formed of a temporal succession of multicarrier symbols intended to be transmitted at a faster-than-Nyquist rate, called FTN transmission, **characterized in that** said method includes:

   - a step of precoding (31) a first subset of symbols of said set of symbols, delivering a first subset of precoded symbols,
   said step of precoding (31) modifying the value of a symbol of said first subset for taking account of interference generated by the FTN transmission on this symbol by at least one other symbol of said set of symbols intended to be transmitted at the same instant or at the same frequency according to a predetermined time/frequency transmission pattern, and
   - a step of modulating (32) a set of carriers from said first subset of precoded symbols and a second subset of non-precoded symbols of said set of symbols, delivering said multicarrier signal, said step of modulating (32) modulating each carrier of said set of carriers by a precoded symbol of said first subset or by a non-precoded symbol of said second subset according to said predetermined transmission pattern.

2. Method according to Claim 1, **characterized in that** the number of precoded symbols of said first subset is less than or equal to the number of non-precoded symbols of said second subset.

3. Method according to either one of Claims 1 and 2, **characterized in that** said step of modulating (32) implements an FTN-OQAM type modulation, and **in that** said step of precoding (31) delivers, from a symbol $a_{m_0,n_0}$ of the set of symbols, a precoded symbol $c_{m_0,n_0}$ intended to modulate a carrier at the location $(m_0,n_0)$ in said predetermined transmission pattern, such that:

$$c_{m_0,n_0} = \begin{cases} \left(a_{m_0,n_0} - \alpha ISI \left(if\ \beta = 0\ and\ n_0 = k\ mod\ (l+2)\ and\ n_0 = (k+1)mod(l+2),\ (k \in \mathbb{N}\ and\ k \leq l+1)\right) \right. \\ \left(a_{m_0,n_0} - \beta ICI,\ if\ (\alpha = 0\ and\ m_0 = k\ mod(l'+1),(k \in \mathbb{N}\ and\ k \leq l'))\right) \\ \left(a_{m_0,n_0} - \alpha ISI - \beta ICI\ if\ \left(m_0 = k\ mod(l'+1),(k \in \mathbb{N}\ and\ k \leq l')\right)\right. \\ and\ n_0 = k'\ mod\ (l+2)\ and\ n_0 = (k'+1)mod(l+2),\ (k' \in \mathbb{N}\ and\ k' \leq l+1)) \end{cases}$$

   with:

   - mod the modulo operator,
   - $\alpha$ and $\beta$ selection factors of a type of interference to be processed, $0 \leq \alpha, \beta \leq 1$
   - ICI an intercarrier interference term determined on said carrier at the location $(m_0,n_0)$ and due to the symbols $a_{m_0+q,n}$ and $a_{m_0-q,n}$,
   - ISI an intersymbol interference term determined on said carrier at the location $(m_0,n_0)$ and due to the symbols $a_{m_0,n_0+p}$ and $a_{m_0,n_0\text{-}p}$,
   - $p, q \in \Re^+$, $p \in [-l,l]$ and $q \in [-l', l']$, $l, l' \in \mathbb{N}$.

4. Method according to either one of Claims 1 and 2, **characterized in that** said step of modulating (32) implements an FTN-OFDM type modulation, and **in that** said step of precoding (31) delivers, from a symbol $a_{m_0,n_0}$ of the set of symbols, a precoded symbol $c_{m_0,n_0}$ intended to modulate a carrier at the location $(m_0,n_0)$ in said predetermined transmission pattern, such that:

$$c_{m_0,n_0} = \begin{cases} \left(a_{m_0,n_0} - \alpha ISI\ if\ \left(\beta = 0\ and\ n_0 = k\ mod\ (l'+1),(k \in \mathbb{N}\ and\ k \leq l')\right)\right) \\ \left(a_{m_0,n_0} - \beta ICI\ if\ (\alpha = 0\ and\ m_0 = k\ mod(l+1),(k \in \mathbb{N}\ and\ k \leq l))\right) \\ \left(a_{m_0,n_0} - \alpha ISI - \beta ICI\ if\left(m_0 = k\ mod(l+1),\ and\ n_0 = k'\ mod\ (l'+1),(k,k' \in \mathbb{N}, k \leq l\ and\ k' \leq l')\right)\right) \end{cases}$$

with:

- mod the modulo operator,
- $\alpha$ and $\beta$ selection factors of a type of interference to be processed, $0 \leq \alpha, \beta \leq$ **1,**
- ICI an intercarrier interference term determined on said carrier at the location $(m_0, n_0)$ and due to the symbols $a_{m_0+q,n}$ and $a_{m_0-q,n'}$
- ISI an intersymbol interference term determined on said carrier at the location $(m_0, n_0)$ and due to the symbols $a_{m_0,n_0+p}$ and $a_{m_0,n_0-p'}$

- $p, q \in \Re^+$, $p \in [-l, l]$, and $q \in [-l', l']$, $l, l' \in \mathbb{N}$.

5. Method according to any one of Claims 1 to 4, **characterized in that** said predetermined transmission pattern is selected by taking into account at least one element belonging to the group including:

   - a type of modulation implemented in said step of modulating;
   - a type of prototype filter used in said step of modulating;
   - a type of channel used for the transmission of said multicarrier signal.

6. Method of receiving a multicarrier signal, delivering a set of estimated symbols, said multicarrier signal being formed of a temporal succession of multicarrier symbols intended to be transmitted at a faster-than-Nyquist rate, called FTN transmission, **characterized in that** said method includes:

   - a step of demodulating (41) a set of carriers forming said multicarrier signal, delivering a first subset of demodulated precoded symbols and a second subset of demodulated non-precoded symbols,
   - a step of time and/or frequency equalization (42) of the demodulated precoded symbols, delivering equalized demodulated precoded symbols,
   - a step of time and/or frequency equalization (43) of the demodulated non-precoded symbols, taking into account an estimate of interference generated by the FTN transmission affecting said demodulated non-precoded symbols obtained from said equalized demodulated precoded symbols, delivering equalized demodulated non-precoded symbols.

7. Method according to Claim 6, **characterized in that** it also includes a step of decoding said equalized demodulated precoded symbols, delivering a first subset of estimated symbols, and delivering said estimate of interference affecting said demodulated non-precoded symbols, and a step of decoding said equalized demodulated non-precoded symbols, delivering a second subset of estimated symbols.

8. Method according to Claim 7, **characterized in that** said step of decoding said equalized demodulated non-precoded symbols also delivers an estimate of interference affecting said demodulated precoded symbols, and **in that** said step of time and/or frequency equalization (43) of the demodulated precoded symbols takes account of the estimate of said interference affecting said demodulated precoded symbols.

9. Method according to either one of Claims 7 and 8, **characterized in that** said steps of decoding implement an algorithm of the Maximum A Posteriori (MAP), logarithmic MAP (Log-MAP) or maximum logarithmic MAP (Max-Log-MAP) type.

10. Generating device for generating a multicarrier signal, from a set of symbols, said multicarrier signal being formed of a temporal succession of multicarrier symbols intended to be transmitted at a faster-than-Nyquist rate, called FTN transmission, **characterized in that** said device includes:

    - a precoding module of a first subset of symbols of said set of symbols, delivering a first subset of precoded symbols,
    - said precoding module modifying the value of a symbol of said first subset for taking account of interference generated by the FTN transmission on this symbol by at least one other symbol of said set of symbols intended to be transmitted at the same instant or at a same frequency according to a predetermined time/frequency transmission pattern, and
    - a modulating module of a set of carriers from said first subset of precoded symbols and a second subset of non-precoded symbols of said set of symbols, delivering said multicarrier signal, said modulating module modulating each carrier of said set of carriers by a precoded symbol of said first subset or by a non-precoded symbol of said second subset according to said predetermined transmission pattern.

11. Receiving device for receiving a multicarrier signal, delivering a set of estimated symbols, said multicarrier signal being formed of a temporal succession of multicarrier symbols intended to be transmitted at a faster-than-Nyquist rate, called FTN transmission, **characterized in that** said device includes:

- a demodulation module of a set of carriers forming said multicarrier signal, delivering a first subset of demodulated precoded symbols and a second subset of demodulated non-precoded symbols,
- a time and/or frequency equalization module of the demodulated precoded symbols, delivering equalized demodulated precoded symbols,
- a time and/or frequency equalization module of the demodulated non-precoded symbols, taking into account an estimate of the interference generated by the FTN transmission affecting said demodulated non-precoded symbols obtained from said equalized demodulated precoded symbols, delivering equalized demodulated non-precoded symbols.

12. Computer program comprising instructions for the implementation of a method according to Claim 1 or according to Claim 6 when this program is executed by a processor.

Fig. 1

Fig. 2

EP 3 391 605 B1

Fig. 4

Fig. 15

Fig. 3

Fig. 14

28

Fig. 5

$a_{m_0, n_0-2}$       $c_{m_0, n_0}$       $a_{m_0, n_0+2}$

Fig. 6

Fig. 7

$a_{m_0-1, n_0}$          $c_{m_0, n_0}$          $a_{m_0+1, n_0}$

Fig. 8

$a_{m_0+1, n_0}$

$m$

$n$

$a_{m_0, n_0-2}$

$a_{m_0-1, n_0}$

$c_{m_0, n_0}$

$a_{m_0, n_0+2}$

Fig. 10

$y^c_{m,n}$

581  MMSE-1

59  π

60  dec

$L_a$

π⁻¹

92  SIC 2

SIC 1  91

$y^a_{m,n}$

MMSE-f

59  π

60  dec

$L_a$

582

π⁻¹

Fig. 9

Fig. 11

$a_{m_0, n_0-1}$  $a_{m_0, n_0+1}$

$c_{m_0, n_0}$

Fig. 12

$a_{m_0+1, n_0}$  $a_{m_0, n_0+1}$

$a_{m_0, n_0-1}$  $a_{m_0-1, n_0}$

$c_{m_0, n_0}$

Fig. 13

**RÉFÉRENCES CITÉES DANS LA DESCRIPTION**

**Documents brevets cités dans la description**

- WO 2012042490 A2

**Littérature non-brevet citée dans la description**

- **E. MAZO.** Faster-than-Nyquist signaling. *Bell. Syst. Tech. Journal,* 1975, vol. 54, 1451-1462

- **RUSEK F et al.** Non Binary and Precoded Faster Than Nyquist Signaling. *IEEE TRANSACTIONS ON COMMUNICATIONS*